# EUROPEAN PATENT APPLICATION

(11) **EP 2 299 090 A2**
(43) Date of publication of application: **23.03.2011**
(21) Application number: 10176119.5
(22) Date of filing: 10.09.2010
(51) Int. Cl.: F02C 3/22

(54) **Combustion turbine system with integrated ion transport membrane**

(30) Priority: 18.09.2009 US 562295
(71) Applicant: Air Products and Chemicals, Inc., Allentown, PA 18195-1501 (US); Concepts ETI, Inc., White River Junction, VT 05001 (US)
(72) Inventor: Armstrong, Phillip A., Allentown, PA 18104 (US); Demetri, Elia P., Westford, MA 01886 (US)
(74) Representative: Westendorp | Sommer

(57) **Abstract**

Integrated gas turbine combustion engine and ion transport membrane system (221) comprising a gas turbine combustion engine including a compressor (203) with a compressed oxygen-containing gas outlet (205); a combustor (235) comprising an outer shell, a combustion zone in flow communication with the compressed oxygen-containing gas outlet, and a dilution zone (239) in flow communication with the combustion zone and having one or more dilution gas inlets; and a gas expander. The system includes an ion transport membrane oxygen recovery system (221) with an ion transport membrane module that includes a feed zone, a permeate zone, a feed inlet to the feed zone in flow communication with the compressed oxygen-containing gas outlet of the compressor, a feed zone outlet (233), and a permeate withdrawal outlet from the permeate zone (231). The feed zone outlet of the membrane module is in flow communication with any of the one or more dilution gas inlets of the combustor dilution zone (239).

## Description

### STATEMENT REGARDING FEDERALLY SPONSORED RESEARCH OR DEVELOPMENT

This invention was funded in part by the United States Department of Energy pursuant to Cooperative Agreement No. DE-FC26-98FT40343. The Government has certain rights to this invention.

### BACKGROUND OF THE INVENTION

Air can be separated at high temperatures to produce high-purity oxygen by the use of oxygen-permeable mixed metal oxide ceramic membranes. These membranes operate by the selective permeation of oxygen ions and may be described as ion transport membranes. The mixed metal oxide material used in ion transport membranes may be a mixed conductor that conducts both oxygen ions and electrons, wherein the permeated oxygen ions recombine at the permeate side of the membrane to form oxygen gas.

The feed gas to ion transport membrane separation systems is an oxygen-containing gas (for example, air) that is compressed and heated prior to the membrane system to temperatures in the general range of 700°C to 1100°C. A portion of the feed gas permeates the membrane and is recovered as a hot, high-purity oxygen permeate product. The hot pressurized non-permeate gas is partially depleted in oxygen and contains a significant amount of heat and pressure energy; this energy should be recovered to ensure that the overall oxygen generation process is economically feasible.

In order to recover the considerable heat and pressure energy in the non-permeate gas, ion transport membrane systems can be integrated with energy generation and recovery systems using heat exchangers, combustors, gas turbines, steam turbines, and other heat utilization equipment. Since the non-permeate contains residual oxygen, it can be used as an oxidant stream in combustion processes such as, for example, combustion turbines or gas turbine engines. If the non-permeate has a low oxygen concentration, some bypass air may be mixed with the non-permeate to reach the flammability limit of most fuels used in a combustion process. The heat and pressure energy in the ion transport membrane non-permeate gas thus can be recovered as mechanical energy by gas turbine systems, and this energy can be considered a co-product with the high-purity oxygen permeate gas.

It is well-known in the art to integrate an ion transport membrane system with a gas turbine engine wherein a portion of the gas turbine compressor output provides compressed air feed to the membrane system and the non-permeate stream from the membrane system is introduced directly into a generic gas turbine combustor. Detailed methods describing the integrated use of the non-permeate gas in specific gas turbine combustors, however, have not been disclosed in the art. Thus there is a need for specific methods to utilize the non-permeate gas from ion transport membrane systems in actual gas turbine combustors. This need is addressed by the embodiments of the invention described below and defined by the claims that follow.

### BRIEF SUMMARY OF THE INVENTION

An embodiment of the invention relates to an integrated gas turbine combustion engine and ion transport membrane system comprising
(a) a gas turbine combustion engine including
   (1) a compressor comprising a compressed oxygen-containing gas outlet and a compressor drive shaft;
   (2) a combustor comprising an outer shell, a combustion zone having one or more fuel inlets and one or more oxygen-containing gas inlets; a dilution zone adapted to receive combustion gas from the combustion zone, wherein the dilution zone has a combustion gas inlet, a combustion gas outlet, and one or more dilution gas inlets; and a combustion zone liner surrounding the combustion zone;
   (3) a combustion zone annular cooling region disposed between the outer shell and the combustion zone liner, wherein the combustion zone annular cooling region has one or more oxygen-containing gas inlets and is in flow communication with the combustion zone via at least one of the one or more oxygen-containing gas inlets;
   (4) a gas expander comprising an inlet in flow communication with the combustion gas outlet, an expansion turbine, and a work output shaft driven by the expansion turbine; and
   (5) piping that places the compressed oxygen-containing gas outlet of the compressor in flow communication with the combustion zone;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone; and
(c) piping that places the feed zone outlet of the membrane module in flow communication with any of the one or more dilution gas inlets.

Another embodiment of the invention includes a method of operating an integrated combustion turbine and ion transport membrane system comprising
(a) providing an integrated gas turbine combustion engine and ion transport membrane system that includes
   (1) a gas turbine combustion engine comprising
      (1a) a compressor having a compressed oxygen-containing gas outlet and a compressor drive shaft;
      (1b) a combustor comprising an outer shell, a combustion zone having one or more fuel inlets and one or more oxygen-containing gas inlets; a dilution zone adapted to receive combustion gas from the combustion zone, wherein the dilution zone has a combustion gas inlet, one or more dilution gas inlets, and a diluted combustion gas outlet; and a combustion zone liner surrounding the combustion zone;
      (1c) a combustion zone annular cooling region disposed between the outer shell and the combustion zone liner, wherein the combustion zone annular cooling region has one or more oxygen-containing gas inlets and is in flow communication with the combustion zone via at least one of the one or more oxygen-containing gas inlets;
      (1d) a gas expander having an inlet in flow communication with the diluted combustion gas outlet, an expansion turbine, and a work output shaft driven by the expansion turbine; and
      (1e) piping that places the compressed oxygen-containing gas outlet of the compressor in flow communication with the combustion zone;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and providing piping that places the feed zone outlet of the membrane module in flow communication with any of the one or more dilution gas inlets;
(c) compressing air in the compressor to provide the compressed oxygen-containing gas and combusting fuel with a first portion of the compressed oxygen-containing gas in the combustion zone to generate a hot combustion gas; diluting the hot combustion gas with a dilution gas to form a diluted hot combustion gas; and expanding the diluted hot combustion gas in the hot gas expansion turbine to generate shaft work;
(d) heating a second portion of the compressed oxygen-containing gas to provide a hot compressed oxygen-containing gas and introducing the hot compressed oxygen-containing gas into the feed zone of the membrane module, withdrawing an oxygen-depleted non-permeate gas from the feed zone, and withdrawing a permeate gas from the permeate withdrawal outlet of the permeate zone; and
(e) introducing at least a portion of the oxygen-depleted non-permeate gas into the dilution zone.

A related embodiment of the invention includes an integrated gas turbine combustion engine and ion transport membrane system comprising
(a) a gas turbine combustion engine including
   (1) a compressor having a compressed oxygen-containing gas outlet and a compressor drive shaft;
   (2) a combustor comprising an outer shell, a combustion zone having a combustible gas inlet and one or more oxygen-containing gas inlets; and a combustion zone liner surrounding the combustion zone;
   (3) a combustion zone annular cooling region disposed between the outer liner and the combustion zone liner, wherein the combustion zone annular cooling region has an oxygen-containing gas inlet and is in flow communication with the combustion zone via at least one of the one or more oxygen-containing gas inlets;
   (4) a gas expander comprising an inlet in flow communication with the combustion gas outlet, an expansion turbine, and a work output shaft driven by the expansion turbine; and
   (5) piping adapted to transfer a first portion of the compressed oxygen-containing gas from the compressor to the oxygen-containing gas inlet of the combustion zone cooling region;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone;
(c) a mixing zone, piping adapted to transfer a second portion of the compressed oxygen-containing gas from the compressor to the mixing zone, piping adapted to transfer the oxygen-depleted non-permeate gas from the feed zone to the mixing zone; and
(d) piping adapted to transfer a mixture comprising the second portion of the compressed oxygen-containing gas and the oxygen-depleted non-permeate gas into the combustion zone.

Another related embodiment includes a method of operating an integrated combustion turbine and ion transport membrane system comprising
(a) providing an integrated gas turbine combustion engine and ion transport membrane system that includes
   (1) a gas turbine combustion engine including
      (1a) a compressor having a compressed oxygen-containing gas outlet and a compressor drive shaft;
      (1b) a combustor comprising an outer shell, a combustion zone having a combustible gas inlet and one or more oxygen-containing gas inlets; and a combustion zone liner surrounding the combustion zone;
      (1c) a combustion zone annular cooling region between the combustion zone and the combustion zone liner, wherein the combustion zone annular cooling region has an oxygen-containing gas inlet and is in flow communication with the combustion zone via at least one of the one or more oxygen-containing gas inlets; and
      (1d) a gas expander having an inlet in flow communication with the combustion gas outlet, an expansion turbine, and a work output shaft driven by the expansion turbine;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone;
(c) compressing air in the compressor to provide the compressed oxygen-containing gas, dividing the compressed oxygen-containing gas into a first portion, a second portion, and a third portion, and introducing the first portion into the combustion zone annular cooling region;
(d) heating the second portion of the compressed oxygen-containing gas to provide a hot compressed oxygen-containing gas and introducing the hot compressed oxygen-containing gas into the feed zone of the membrane module, withdrawing the oxygen-depleted non-permeate gas from the feed zone, and withdrawing a permeate gas from the permeate withdrawal outlet of the permeate zone;
(e) mixing the third portion of the compressed oxygen-containing gas with the oxygen-depleted non-permeate gas from the feed zone to form a mixed oxygen-depleted gas, combusting a fuel with the mixed oxygen-depleted gas in the combustion zone to generate the hot combustion gas, and expanding the hot combustion gas in the hot gas expansion turbine to generate shaft work.

A further embodiment of the invention relates to an integrated gas turbine combustion engine and ion transport membrane system comprising
(a) a gas turbine combustion engine including
   (1) a compressor comprising a compressed oxygen-containing gas outlet and a compressor drive shaft;
   (2) a combustor comprising a combustion zone having a combustible gas inlet and one or more oxygen-containing gas inlets; a dilution zone adapted to receive combustion gas from the combustion zone, wherein the dilution zone has a combustion gas inlet, a combustion gas outlet, and a one or more dilution gas inlets;
   (3) a gas expander comprising an inlet in flow communication with the combustion gas outlet, an expansion turbine, and a work output shaft driven by the expansion turbine; and
   (4) piping that places the compressed oxygen-containing gas outlet of the compressor in flow communication with the combustion zone;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone; and
(c) piping that places the feed zone outlet of the membrane module in flow communication with any of the one or more dilution gas inlets.

Another further embodiment of the invention includes a method of operating an integrated combustion turbine and ion transport membrane system comprising
(a) providing an integrated gas turbine combustion engine and ion transport membrane system that includes
   (1) a gas turbine combustion engine comprising
      (1a) a compressor having a compressed oxygen-containing gas outlet and a compressor drive shaft;
      (1b) a combustor comprising a combustion zone having a combustible gas inlet and one or more oxygen-containing gas inlets; and a dilution zone adapted to receive combustion gas from the combustion zone, wherein the dilution zone has a combustion gas inlet, a one or more dilution gas inlets, and a diluted combustion gas outlet;
      (1c) a gas expander having an inlet in flow communication with the diluted combustion gas outlet, an expansion turbine, and a work output shaft driven by the expansion turbine; and
      (1d) piping that places the compressed oxygen-containing gas outlet of the compressor in flow communication with the combustion zone;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and providing piping that places the feed zone outlet of the membrane module in flow communication with any of the one or more dilution gas inlets;
(c) compressing air in the compressor to provide the compressed oxygen-containing gas and combusting fuel with a first portion of the compressed oxygen-containing gas in the combustion zone to generate a hot combustion gas; diluting the hot combustion gas with a dilution gas to form a diluted hot combustion gas; and expanding the diluted hot combustion gas in the hot gas expansion turbine to generate shaft work;
(d) heating a second portion of the compressed oxygen-containing gas to provide a hot compressed oxygen-containing gas and introducing the hot compressed oxygen-containing gas into the feed zone of the membrane module, withdrawing an oxygen-depleted non-permeate gas from the feed zone, and withdrawing a permeate gas from the permeate withdrawal outlet of the permeate zone; and
(e) introducing at least a portion of the oxygen-depleted non-permeate gas into the dilution zone.

An optional embodiment of the invention includes a method of operating an integrated combustion turbine and ion transport membrane system comprising
(a) providing an integrated gas turbine combustion engine and ion transport membrane system that includes
   (1) a gas turbine combustion engine comprising
      (1a) a compressor having a compressed oxygen-containing gas outlet and a compressor drive shaft;
      (1b) a combustor comprising a combustion zone having a combustible gas inlet and one or more oxygen-containing gas inlets; and a dilution zone adapted to receive combustion gas from the combustion zone, wherein the dilution zone has a combustion gas inlet, a one or more dilution gas inlets, and a diluted combustion gas outlet; and
      (1c) a gas expander having an inlet in flow communication with the diluted combustion gas outlet, an expansion turbine, and a work output shaft driven by the expansion turbine;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and providing piping that places the feed zone outlet of the membrane module in flow communication with any of the one or more dilution gas inlets;
(c) compressing air in the compressor to provide a compressed oxygen-containing gas, heating at least a portion of the compressed oxygen-containing gas to provide a hot compressed oxygen-containing gas, and introducing the hot compressed oxygen-containing gas into the feed zone of the membrane module, withdrawing an oxygen-depleted non-permeate gas from the feed zone, and withdrawing a high-purity oxygen permeate gas from the permeate withdrawal outlet of the permeate zone; and
(d) combusting fuel with at least a portion of the high-purity oxygen permeate gas in the combustion zone to generate a hot combustion gas; diluting the hot combustion gas with a dilution gas to form a diluted hot combustion gas; and expanding the diluted hot combustion gas in the hot gas expansion turbine to generate shaft work.

A final embodiment of the invention relates to an integrated gas turbine combustion engine and ion transport membrane system comprising
(a) a gas turbine combustion engine including a compressor with a compressed oxygen-containing gas outlet; a combustor comprising an outer shell, a combustion zone in flow communication with the compressed oxygen-containing gas outlet, and a dilution zone in flow communication with the combustion zone and having one or more dilution gas inlets; and a gas expander; and
(b) an ion transport membrane oxygen recovery system with an ion transport membrane module that includes a feed zone, a permeate zone, a feed inlet to the feed zone in flow communication with the compressed oxygen-containing gas outlet of the compressor, a feed zone outlet, and a permeate withdrawal outlet from the permeate zone;
   wherein the feed zone outlet of the membrane module is in flow communication with any of the one or more dilution gas inlets of the combustor dilution zone.

Aspect #1. An integrated gas turbine combustion engine and ion transport membrane system comprising
(a) a gas turbine combustion engine including
   (1) a compressor comprising a compressed oxygen-containing gas outlet and a compressor drive shaft;
   (2) a combustor comprising an outer shell, a combustion zone having one or more fuel inlets and one or more oxygen-containing gas inlets; a dilution zone adapted to receive combustion gas from the combustion zone, wherein the dilution zone has a combustion gas inlet, a combustion gas outlet, and one or more dilution gas inlets; and a combustion zone liner surrounding the combustion zone;
   (3) a combustion zone annular cooling region disposed between the outer shell and the combustion zone liner, wherein the combustion zone annular cooling region has one or more oxygen-containing gas inlets and is in flow communication with the combustion zone via at least one of the one or more oxygen-containing gas inlets;
   (4) a gas expander comprising an inlet in flow communication with the combustion gas outlet, an expansion turbine, and a work output shaft driven by the expansion turbine; and
   (5) piping that places the compressed oxygen-containing gas outlet of the compressor in flow communication with the combustion zone;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone; and
(c) piping that places the feed zone outlet of the membrane module in flow communication with any of the one or more dilution gas inlets.

Aspect #2. The system as defined in aspect #1 comprising piping that places the permeate withdrawal outlet from the permeate zone in flow communication with at least one of the one or more oxygen-containing gas inlets of the combustion zone.

Aspect #3. The system as defined in aspect #1 comprising piping that places the feed zone outlet of the membrane module in flow communication with either or both of the combustion zone annular cooling region and at least one of the one or more oxygen-containing gas inlets of the combustion zone.

Aspect #4. The system as defined in aspect #3 comprising piping between the compressed oxygen-containing gas outlet of the compressor and any of the one or more oxygen-containing gas inlets of the combustion zone annular cooling region, wherein the piping is adapted to introduce compressed oxygen-containing gas into the combustion zone annular cooling region.

Aspect #5. The system as defined in aspect #4 comprising piping that places the permeate withdrawal outlet from the permeate zone in flow communication with at least one of the one or more oxygen-containing gas inlets of the combustion zone.

Aspect #6. The system as defined in aspect #4 comprising a mixing zone, piping that places the compressed oxygen-containing gas outlet of the compressor in flow communication with the mixing zone, piping that places the feed zone outlet of the ion transport membrane module in flow communication with the mixing zone, piping adapted to introduce a fuel into the mixing zone, and piping to transfer a combustible gas from the mixing zone to any of the one or more combustible gas inlets of the combustion zone.

Aspect #7. The system as defined in aspect #3 comprising piping between the compressed oxygen-containing gas outlet of the compressor and any of the one or more oxygen-containing gas inlets of the combustion zone, wherein the piping is adapted to introduce compressed oxygen-containing gas directly into the combustion zone.

Aspect #8. The system as defined in aspect #7 comprising piping that places the permeate withdrawal outlet from the permeate zone in flow communication with the piping that is adapted to introduce compressed oxygen-containing gas directly into the combustion zone.

Aspect #9. The system as defined in aspect #7 comprising a dilution zone liner surrounding the dilution zone and a dilution zone annular cooling region disposed between the outer shell and the dilution zone liner, wherein the one or more dilution gas inlets are adapted to feed an oxygen-depleted gas from the ion transport membrane oxygen recovery system into the dilution zone annular cooling region, and wherein the dilution zone annular cooling region is in flow communication with the dilution zone.

Aspect #10. The system as defined in aspect #9 comprising a mixing zone, piping that places the compressed oxygen-containing gas outlet of the compressor in flow communication with the mixing zone, piping that places the feed zone outlet of the ion transport membrane module in flow communication with the mixing zone, and piping adapted to transfer an oxygen-depleted gas from the mixing zone to at least one of the one or more oxygen-containing gas inlets of the combustion zone.

Aspect #11. The system as defined in aspect #1 comprising a heater adapted to heat at least a portion of a compressed oxygen-containing gas stream from the compressor to form a heated compressed oxygen-containing gas stream and piping means to deliver the heated compressed oxygen-containing gas stream from the heating means to the feed inlet of the feed zone of the ion transport membrane module.

Aspect #12. The system as defined in aspect #11 wherein the heater comprises a direct-fired combustor adapted to combust a fuel with the compressed oxygen-containing gas stream to provide the heated compressed oxygen-containing gas stream.

Aspect #13. The system as defined in aspect #1 wherein the combustion zone comprises a primary combustion zone followed by a secondary combustion zone, wherein at least one of one or more oxygen-containing gas inlets is adapted to introduce at least a portion of the compressed oxygen-containing gas into the primary combustion zone, wherein at least one of one or more oxygen-containing gas inlets is adapted to introduce at least a portion of the compressed oxygen-containing gas into the secondary combustion zone, and wherein the secondary combustion zone includes the combustion gas outlet.

Aspect #14. The system as defined in aspect #13 comprising piping that places the permeate withdrawal outlet from the permeate zone in flow communication with the primary combustion zone and/or the secondary combustion zone.

Aspect #15. The system as defined in aspect #1 wherein the work output shaft is adapted to provide at least a portion of the work required to drive the compressor via the compressor drive shaft.

Aspect #16. A method of operating an integrated combustion turbine and ion transport membrane system comprising
(a) providing an integrated gas turbine combustion engine and ion transport membrane system that includes
   (1) a gas turbine combustion engine comprising
      (1a) a compressor having a compressed oxygen-containing gas outlet and a compressor drive shaft;
      (1b) a combustor comprising an outer shell, a combustion zone having one or more fuel inlets and one or more oxygen-containing gas inlets; a dilution zone adapted to receive combustion gas from the combustion zone, wherein the dilution zone has a combustion gas inlet, one or more dilution gas inlets, and a diluted combustion gas outlet; and a combustion zone liner surrounding the combustion zone;
      (1c) a combustion zone annular cooling region disposed between the outer shell and the combustion zone liner, wherein the combustion zone annular cooling region has one or more oxygen-containing gas inlets and is in flow communication with the combustion zone via at least one of the one or more oxygen-containing gas inlets;
      (1d) a gas expander having an inlet in flow communication with the diluted combustion gas outlet, an expansion turbine, and a work output shaft driven by the expansion turbine; and
      (1e) piping that places the compressed oxygen-containing gas outlet of the compressor in flow communication with the combustion zone;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and providing piping that places the feed zone outlet of the membrane module in flow communication with any of the one or more dilution gas inlets;
(c) compressing air in the compressor to provide the compressed oxygen-containing gas and combusting fuel with a first portion of the compressed oxygen-containing gas in the combustion zone to generate a hot combustion gas; diluting the hot combustion gas with a dilution gas to form a diluted hot combustion gas; and expanding the diluted hot combustion gas in the hot gas expansion turbine to generate shaft work;
(d) heating a second portion of the compressed oxygen-containing gas to provide a hot compressed oxygen-containing gas and introducing the hot compressed oxygen-containing gas into the feed zone of the membrane module, withdrawing an oxygen-depleted non-permeate gas from the feed zone, and withdrawing a permeate gas from the permeate withdrawal outlet of the permeate zone; and
(e) introducing at least a portion of the oxygen-depleted non-permeate gas into the dilution zone.

Aspect #17. The method as defined in aspect #16 comprising introducing all or a portion of the permeate gas into any of the one or more oxygen-containing gas inlets.

Aspect #18. The method as defined in aspect #16 comprising introducing a portion of the compressed oxygen-containing gas into the combustion zone annular cooling region.

Aspect #19. The method as defined in aspect #18 comprising mixing a portion of the compressed oxygen-containing gas with a portion of the oxygen-depleted non-permeate gas from the feed zone of the ion transport membrane module to form a mixed oxygen-containing gas, mixing a fuel with the mixed oxygen-containing gas to form a combustible gas, and introducing the combustible gas into the combustible gas inlet of the combustion zone.

Aspect #20. The method as defined in aspect #16 comprising introducing a portion of the compressed oxygen-containing gas directly into the combustion zone.

Aspect #21. The method as defined in aspect #20 comprising either (1) introducing all or a portion of the permeate gas directly into the combustion zone or (2) mixing all or a portion of the permeate gas with fuel to form a fuel-oxygen mixture and introducing the mixture directly into the combustion zone.

Aspect #22. The method as defined in aspect #20 wherein the combustor comprises a dilution zone liner surrounding the dilution zone and a dilution zone annular cooling region disposed between the outer shell and the dilution zone liner, wherein another portion of the compressed oxygen-containing gas is mixed with the oxygen-depleted non-permeate gas from the feed zone of the ion transport membrane module to form a mixed oxygen-containing gas, and wherein a portion of the mixed oxygen-containing gas is introduced into the dilution zone annular cooling region.

Aspect #23. The method as defined in aspect #22 wherein another portion of the mixed oxygen-containing gas is introduced into the combustion zone annular cooling region.

Aspect #24. The method as defined in aspect #16 wherein the heating of the second portion of the compressed oxygen-containing gas is effected by combusting a fuel with the compressed oxygen-containing gas stream in a direct-fired combustor to provide the heated compressed oxygen-containing gas stream.

Aspect #25. The method as defined in aspect #16 wherein the combustion zone comprises a primary combustion zone followed by a secondary combustion zone and the secondary combustion zone includes the combustion gas outlet, wherein a portion of the compressed oxygen-containing gas is introduced into the primary combustion zone, and wherein another portion of the compressed oxygen-containing gas is introduced into the secondary combustion zone.

Aspect #26. The method as defined in aspect #16 wherein at least a portion of the work required to drive the compressor via the compressor drive shaft is provided via the work output shaft of the expansion turbine.

Aspect #27. The method as defined in aspect #25 wherein oxygen-depleted non-permeate gas from the feed zone of the ion transport membrane module is introduced into either of or both of the primary combustion zone and the secondary combustion zone.

Aspect #28. An integrated gas turbine combustion engine and ion transport membrane system comprising
(a) a gas turbine combustion engine including
   (1) a compressor having a compressed oxygen-containing gas outlet and a compressor drive shaft;
   (2) a combustor comprising an outer shell, a combustion zone having a combustible gas inlet and one or more oxygen-containing gas inlets; and a combustion zone liner surrounding the combustion zone;
   (3) a combustion zone annular cooling region disposed between the outer liner and the combustion zone liner, wherein the combustion zone annular cooling region has an oxygen-containing gas inlet and is in flow communication with the combustion zone via at least one of the one or more oxygen-containing gas inlets;
   (4) a gas expander comprising an inlet in flow communication with the combustion gas outlet, an expansion turbine, and a work output shaft driven by the expansion turbine; and
   (5) piping adapted to transfer a first portion of the compressed oxygen-containing gas from the compressor to the oxygen-containing gas inlet of the combustion zone cooling region;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone;
(c) a mixing zone, piping adapted to transfer a second portion of the compressed oxygen-containing gas from the compressor to the mixing zone, piping adapted to transfer the oxygen-depleted non-permeate gas from the feed zone to the mixing zone; and
(d) piping adapted to transfer a mixture comprising the second portion of the compressed oxygen-containing gas and the oxygen-depleted non-permeate gas into the combustion zone.

Aspect #29. The system as defined in aspect #28 wherein the piping adapted to transfer the mixture comprising the second portion of the compressed oxygen-containing gas and the oxygen-depleted non-permeate gas into the combustion zone is further adapted to introduce the mixture directly into the combustion zone.

Aspect #30. A method of operating an integrated combustion turbine and ion transport membrane system comprising
(a) providing an integrated gas turbine combustion engine and ion transport membrane system that includes
   (1) a gas turbine combustion engine including
      (1a) a compressor having a compressed oxygen-containing gas outlet and a compressor drive shaft;
      (1b) a combustor comprising an outer shell, a combustion zone having a combustible gas inlet and one or more oxygen-containing gas inlets; and a combustion zone liner surrounding the combustion zone;
      (1c) a combustion zone annular cooling region between the combustion zone and the combustion zone liner, wherein the combustion zone annular cooling region has an oxygen-containing gas inlet and is in flow communication with the combustion zone via at least one of the one or more oxygen-containing gas inlets; and
      (1d) a gas expander having an inlet in flow communication with the combustion gas outlet, an expansion turbine, and a work output shaft driven by the expansion turbine;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone;
(c) compressing air in the compressor to provide the compressed oxygen-containing gas, dividing the compressed oxygen-containing gas into a first portion, a second portion, and a third portion, and introducing the first portion into the combustion zone annular cooling region;
(d) heating the second portion of the compressed oxygen-containing gas to provide a hot compressed oxygen-containing gas and introducing the hot compressed oxygen-containing gas into the feed zone of the membrane module, withdrawing the oxygen-depleted non-permeate gas from the feed zone, and withdrawing a permeate gas from the permeate withdrawal outlet of the permeate zone;
(e) mixing the third portion of the compressed oxygen-containing gas with the oxygen-depleted non-permeate gas from the feed zone to form a mixed oxygen-depleted gas, combusting a fuel with the mixed oxygen-depleted gas in the combustion zone to generate the hot combustion gas, and expanding the hot combustion gas in the hot gas expansion turbine to generate shaft work.

Aspect #31. The method as defined in aspect #30 wherein the mixed oxygen-depleted gas is introduced directly into the combustion zone.

Aspect #32. An integrated gas turbine combustion engine and ion transport membrane system comprising
(a) a gas turbine combustion engine including
   (1) a compressor comprising a compressed oxygen-containing gas outlet and a compressor drive shaft;
   (2) a combustor comprising a combustion zone having a combustible gas inlet and one or more oxygen-containing gas inlets; a dilution zone adapted to receive combustion gas from the combustion zone, wherein the dilution zone has a combustion gas inlet, a combustion gas outlet, and a one or more dilution gas inlets;
   (3) a gas expander comprising an inlet in flow communication with the combustion gas outlet, an expansion turbine, and a work output shaft driven by the expansion turbine; and
   (4) piping that places the compressed oxygen-containing gas outlet of the compressor in flow communication with the combustion zone;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone; and
(c) piping that places the feed zone outlet of the membrane module in flow communication with any of the one or more dilution gas inlets.

Aspect #33. The system as defined in aspect #32 comprising piping that places the permeate withdrawal outlet from the permeate zone in flow communication with at least one of the one or more oxygen-containing gas inlets of the combustion zone.

Aspect #34. A method of operating an integrated combustion turbine and ion transport membrane system comprising
(a) providing an integrated gas turbine combustion engine and ion transport membrane system that includes
   (1) a gas turbine combustion engine comprising
      (1a) a compressor having a compressed oxygen-containing gas outlet and a compressor drive shaft;
      (1b) a combustor comprising a combustion zone having a combustible gas inlet and one or more oxygen-containing gas inlets; and a dilution zone adapted to receive combustion gas from the combustion zone, wherein the dilution zone has a combustion gas inlet, a one or more dilution gas inlets, and a diluted combustion gas outlet;
      (1c) a gas expander having an inlet in flow communication with the diluted combustion gas outlet, an expansion turbine, and a work output shaft driven by the expansion turbine; and
      (1d) piping that places the compressed oxygen-containing gas outlet of the compressor in flow communication with the combustion zone;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and providing piping that places the feed zone outlet of the membrane module in flow communication with any of the one or more dilution gas inlets;
(c) compressing air in the compressor to provide the compressed oxygen-containing gas and combusting fuel with a first portion of the compressed oxygen-containing gas in the combustion zone to generate a hot combustion gas; diluting the hot combustion gas with a dilution gas to form a diluted hot combustion gas; and expanding the diluted hot combustion gas in the hot gas expansion turbine to generate shaft work;
(d) heating a second portion of the compressed oxygen-containing gas to provide a hot compressed oxygen-containing gas and introducing the hot compressed oxygen-containing gas into the feed zone of the membrane module, withdrawing an oxygen-depleted non-permeate gas from the feed zone, and withdrawing a permeate gas from the permeate withdrawal outlet of the permeate zone; and
(e) introducing at least a portion of the oxygen-depleted non-permeate gas into the dilution zone.

Aspect #35. The method as defined in aspect #34 comprising introducing all or a portion of the permeate gas into any of the one or more oxygen-containing gas inlets.

Aspect #36. A method of operating an integrated combustion turbine and ion transport membrane system comprising
(a) providing an integrated gas turbine combustion engine and ion transport membrane system that includes
   (1) a gas turbine combustion engine comprising
      (1a) a compressor having a compressed oxygen-containing gas outlet and a compressor drive shaft;
      (1b) a combustor comprising a combustion zone having a combustible gas inlet and one or more oxygen-containing gas inlets; and a dilution zone adapted to receive combustion gas from the combustion zone, wherein the dilution zone has a combustion gas inlet, a one or more dilution gas inlets, and a diluted combustion gas outlet; and
      (1c) a gas expander having an inlet in flow communication with the diluted combustion gas outlet, an expansion turbine, and a work output shaft driven by the expansion turbine;
(b) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and providing piping that places the feed zone outlet of the membrane module in flow communication with any of the one or more dilution gas inlets;
(c) compressing air in the compressor to provide a compressed oxygen-containing gas, heating at least a portion of the compressed oxygen-containing gas to provide a hot compressed oxygen-containing gas, and introducing the hot compressed oxygen-containing gas into the feed zone of the membrane module, withdrawing an oxygen-depleted non-permeate gas from the feed zone, and withdrawing a high-purity oxygen permeate gas from the permeate withdrawal outlet of the permeate zone; and
(d) combusting fuel with at least a portion of the high-purity oxygen permeate gas in the combustion zone to generate a hot combustion gas; diluting the hot combustion gas with a dilution gas to form a diluted hot combustion gas; and expanding the diluted hot combustion gas in the hot gas expansion turbine to generate shaft work.

Aspect #37. The method as defined in aspect #36 comprising introducing at least a portion of the oxygen-depleted non-permeate gas into the dilution zone as dilution gas.

Aspect #38. The method as defined in aspect #36 comprising introducing at least a portion of the compressed oxygen-containing gas into the dilution zone as dilution gas.

Aspect #39. An integrated gas turbine combustion engine and ion transport membrane system comprising
(a) a gas turbine combustion engine including a compressor with a compressed oxygen-containing gas outlet; a combustor comprising an outer shell, a combustion zone in flow communication with the compressed oxygen-containing gas outlet, and a dilution zone in flow communication with the combustion zone and having one or more dilution gas inlets; and a gas expander; and
(b) an ion transport membrane oxygen recovery system with an ion transport membrane module that includes a feed zone, a permeate zone, a feed inlet to the feed zone in flow communication with the compressed oxygen-containing gas outlet of the compressor, a feed zone outlet, and a permeate withdrawal outlet from the permeate zone;
wherein the feed zone outlet of the membrane module is in flow communication with any of the one or more dilution gas inlets of the combustor dilution zone.

Aspect #40. A combustion method comprising:
(a) providing an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of a compressor, a feed zone outlet adapted to withdraw an oxygen-depleted non-permeate gas from the feed zone, and a permeate withdrawal outlet from the permeate zone, and providing piping that places the feed zone outlet of the membrane module in flow communication with a burner;
(b) compressing air in the compressor to provide a compressed oxygen-containing gas, heating at least a portion of the compressed oxygen-containing gas to provide a hot compressed oxygen-containing gas, and introducing the hot compressed oxygen-containing gas into the feed zone of the membrane module, withdrawing an oxygen-depleted non-permeate gas from the feed zone, and withdrawing a high-purity oxygen permeate gas from the permeate withdrawal outlet of the permeate zone; and
(c) combusting fuel in a furnace with at least a portion of the oxygen-depleted non-permeate gas to reduce NOx formation.

Aspect #41. The method as defined in aspect #40 wherein the furnace is a boiler, glass-melting furnace, a metal-melting furnace, a kiln for the production of sodium carbonate (washing soda), kaolin, or magnesium chromate, a smelter for non-ferrous metals (e.g. Cu, Pb, Ni, Zn), a non-ferrous metal roaster, a paper pulp boiler or other suitable furnace.

### BRIEF DESCRIPTION OF SEVERAL VIEWS OF THE DRAWINGS

Fig. 1 is a schematic diagram of an exemplary gas turbine engine combustor.

Fig. 2 is a schematic flowsheet of an integrated ion transport membrane oxygen separation system integrated with a gas turbine combustion engine according to an embodiment of the invention.

Fig. 3 is a schematic diagram of a gas turbine engine combustor for use in the embodiment of Fig. 2.

Fig. 4 is a schematic flowsheet of an integrated ion transport membrane oxygen separation system integrated with a gas turbine combustion engine according to another embodiment of the invention.

Fig. 5 is a schematic diagram of a gas turbine engine combustor for use in the embodiment of Fig. 4.

Fig. 6 is a schematic flowsheet of an integrated ion transport membrane oxygen separation system integrated with a gas turbine combustion engine according to an alternative embodiment of the invention.

Fig. 7 is a schematic diagram of a gas turbine engine combustor for use in the embodiment of Fig. 6.

Fig. 8 is a schematic flowsheet of an integrated ion transport membrane oxygen separation system integrated with a gas turbine combustion engine for a baseline system in Example 1.

Fig. 9 is a plot of oxygen production rate and electric power output vs. combined air/non-permeate gas temperature in Example 4.

Fig. 10 is a plot of lean blowout equivalence ratio vs. temperature for pre-mixed methane/air flames in Example 5.

Fig. 11 is a plot of the equivalence ratio in the combustor and the temperature of the mixed air/non-permeate stream to the combustor vs. the percentage of air from the gas turbine compressor sent to the ion transport membrane system in Example 5.

### DETAILED DESCRIPTION OF THE INVENTION

The embodiments of the invention are directed to the integration of ion transport membrane (ITM) oxygen separation systems with gas turbine combustion engines and the use of ITM non-permeate gas in gas turbine engine combustors. The combustor of a gas turbine engine, as described in more detail below, comprises a combustion zone and a dilution zone, and the combustion zone may have primary and secondary combustion zones. In one embodiment, a sufficient fraction of the gas turbine compressor discharge stream bypasses the ITM system and is used to satisfy the combustion and liner cooling requirements of the combustor; the remaining fraction provides the feed to the ITM system. The ITM non-permeate stream is introduced into the combustor to provide the required dilution of the flow from the combustion zone of the combustor.

In another embodiment, a portion of the bypass stream is mixed with the non-permeate to reduce its temperature sufficiently, and the mixed stream is used for both liner cooling and dilution. This has the potential of simplifying the thermo-mechanical design of the piping in the integrated ITM-gas turbine system.

In a third embodiment, a portion of the non-permeate stream is mixed with part of the ITM bypass stream, and the resulting mixed stream is premixed with the gas turbine fuel and combusted in the gas turbine combustor. This embodiment can reduce the fuel concentration by dilution with the reduced-oxygen non-permeate stream sufficiently to provide a useful degree of NOₓ control.

These embodiments are described and illustrated below. In the description, the terms "flow communication" and "in flow communication with" are used to define a flow path of a gas from a first region to a second region. The flow path may comprise piping and/or an intermediate region through which the gas flows. Components in the gas are not altered by chemical reaction in the flow path; however, the gas may be heated, cooled, or mixed with another gas during passage through the flow path from the first region to the second region.

The indefinite articles "a" and "an" as used herein mean one or more when applied to any feature in embodiments of the present invention described in the specification and claims. The use of "a" and "an" does not limit the meaning to a single feature unless such a limit is specifically stated. The definite article "the" preceding singular or plural nouns or noun phrases denotes a particular specified feature or particular specified features and may have a singular or plural connotation depending upon the context in which it is used. The adjective "any" means one, some, or all indiscriminately of whatever quantity. The term "and/or" placed between a first entity and a second entity means one of (1) the first entity, (2) the second entity, and (3) the first entity and the second entity.

An oxygen-containing gas is defined as a gas that comprises oxygen but no fuel components. An oxygen-containing gas may be, for example, air, oxygen-depleted air, oxygen-enriched air, or high-purity oxygen containing at least 99 volume % oxygen.

The term "combustion gas" is defined as any gas containing components formed by combustion oxidation reactions. Combustion gas includes effluent gas from a combustion zone or effluent gas from a combustion zone mixed with one or more gases from any other source. A combustion zone is defined as a partially-enclosed or fully enclosed region in which combustion reactions occur. The combustion zone has one or more inlets for fuel and/or combustible gas and/or oxygen-containing gas. A dilution zone is a zone that follows a combustion zone and has one or more dilution gas inlets, wherein a dilution gas is mixed with the combustion gas from the combustion zone to cool the gas and obtain a uniform exit temperature or a desired temperature profile. The dilution gas contains essentially no combustible components and may be, for example, a portion of the oxygen-containing gas introduced into the combustion zone.

The combustion zone has at least one outlet for combustion gas and may have a primary combustion zone and a secondary combustion zone. A primary combustion zone is defined as a region in which all of the fuel is introduced and most of the fuel is combusted with an oxygen-containing gas. A secondary combustion zone is defined as a region following the primary combustion zone wherein remaining fuel from the primary combustion zone is combusted with additional oxygen-containing gas to yield the combustion gas from the combustion zone that flows into the dilution zone.

A fuel is defined as a gas, a liquid, a solid, or mixtures thereof comprising one or more components that will react with oxygen in combustion oxidation reactions. Possible fuels include natural gas, refinery offgas, synthesis gas, hydrogen, ethanol or other alcohols, fuel oil, jet fuel or other hydrocarbon distillates, fuel oil-water emulsions, and suspensions of powdered coal or coke in fuel oil or water. The term "combustible gas" means a gas containing one or more components that will react with oxygen in combustion oxidation reactions. The combustible gas may be a fuel gas comprising fuel components that can react with oxygen or may be a mixture of fuel gas and oxygen-containing gas.

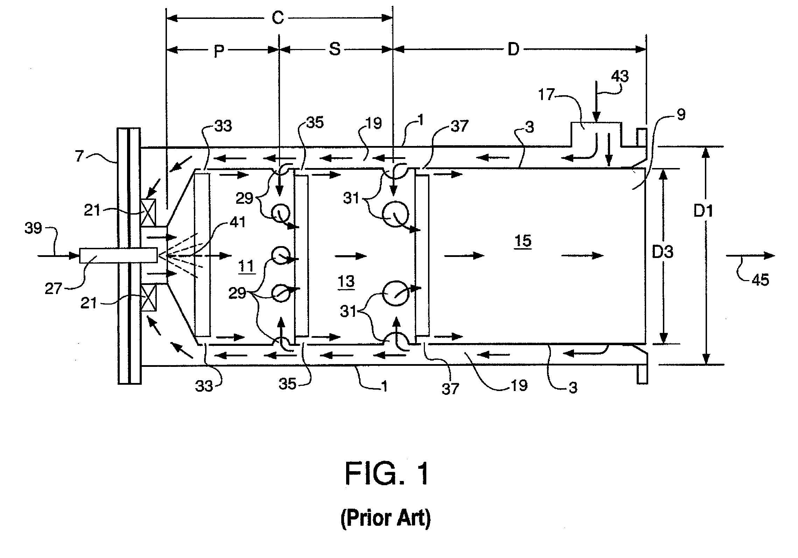

A schematic diagram of a typical gas turbine combustor in cross-section is given in Fig. 1. The combustor comprises outer shell 1 characterized by diameter D1, liner 3 characterized by diameter D3, inlet end 7, and combustion gas discharge end 9. Liner 3 encloses a combustion zone comprising primary combustion zone 11 characterized by axial length P, secondary combustion zone 13 characterized by axial length S, and dilution zone 15 characterized by axial length D. The combustion zone is characterized by axial length C. Oxygen-containing gas inlet 17 is provided to introduce oxygen-containing gas, typically pressurized air, into the combustor.

The annular region between outer shell 1 and liner 3 defines annular cooling zone 19 adapted to direct the oxygen-containing gas toward the inlet end of the combustor, thereby cooling liner 3, providing oxidant gas to primary combustion zone 11 and secondary combustion zone 13, and providing dilution gas to dilution zone 15. Oxidant gas swirler assembly 21 is located at the inlet end of the combustor and at the inlet end of primary combustion zone 11. Fuel inlet 27 is disposed at the inlet end of primary combustion zone 11. The flow direction in annular cooling zone 19 may be co-current or countercurrent to the flow direction within liner 3. In some cases, flow in the annular cooling zone 19 can be in both directions depending on where the air or oxidant gas is introduced into the zone relative to inlets 29 and 31 in liner 3.

Annular cooling zone 19 (and the annular cooling zones of other embodiments described below) is defined by the parallel walls of outer shell 1 and liner 3.

Liner 3 has a plurality of secondary inlets 29 to allow oxygen-containing gas flow from cooling zone 19 into secondary combustion zone 13 and a plurality of dilution gas inlets 31 to allow oxygen-containing gas flow from cooling zone 19 into dilution zone 15. Optionally, liner 3 also has small openings 33, 35, and 37 to direct some oxygen-containing gas from the cooling zone to flow over the inner surface of the liner to providing inner liner cooling. Additional film cooling openings can be provided between openings 33 and 29, between openings 35 and 31, and between opening 37 and outlet 9. The relative flow rates of primary oxygen-containing gas to swirler assembly 21, secondary oxygen-containing gas to combustion zone 13, and dilution gas to dilution zone 15 may be controlled by the sizes and number of secondary inlets 29, dilution gas inlets 31, and small openings 33, 35, and 37.

The combustor operates by introducing liquid fuel 39 through inlet 27, which includes a fuel spray atomization nozzle (not shown), to produce fuel droplets 41. Alternatively, a gaseous fuel may be used with either direct injection of the fuel via inlet 27 or by premixing of the fuel and the oxygen-containing gas. Oxygen-containing gas 43, typically pressurized air, is introduced into the combustor via inlet 17 and flows through the portion of annular cooling zone 19 adjacent dilution zone 15, thereby heating the air and cooling the portion of liner 3 surrounding dilution zone 15. A portion of this air flows through small openings 37 and is directed along the inner surface of the liner to provide additional cooling. Another portion of this air flows through dilution gas inlets 31 and dilutes the combustion gases entering dilution zone 15 from secondary combustion zone 13.

The remaining air continues to flow through the portion of annular cooling zone 19 surrounding secondary combustion zone 13, thereby heating the air and cooling the portion of liner 3 surrounding secondary combustion zone 13. A portion of this air flows through small openings 35 and is directed along the inner surface of the liner to provide additional cooling. Another portion of this air flows through secondary inlets 29 and mixes with the combustion gases entering secondary combustion zone 13 from primary combustion zone 11. The remaining air continues to flow through the portion of annular cooling zone 19 surrounding primary combustion zone 11, thereby heating the air and cooling the portion of liner 3 surrounding primary combustion zone 11. A portion of this air flows through small openings 33 and is directed along the inner surface of the liner to provide additional cooling. The remaining air flows through swirler assembly 21 and is mixed with fuel 41.

Initial combustion occurs in primary combustion zone 11, the combustion gases mix with secondary air from secondary inlets 29, and the mixed gas passes into secondary combustion zone 13 where additional combustion reactions proceed. An additional set of liner openings (not shown) between openings 29 and 31 also may be used to introduce dilution air more gradually so that the combustion reactions of less reactive species such as carbon monoxide are not quenched before they reach completion. Mixed combustion gas from secondary combustion zone 13 mixes with dilution air from dilution gas inlets 31 in dilution zone 15. Hot pressurized combustion gas 45 flows to an expansion turbine (not shown) to generate work.

The relative flow rates of the primary combustion air, secondary combustion air, and dilution air in the combustor of Fig. 1 (and in the other combustors described below) will depend on the size and number of openings 29 and 31. The relationships among these flow rates can be set by proper selection of the size and number of openings 29 and 31.

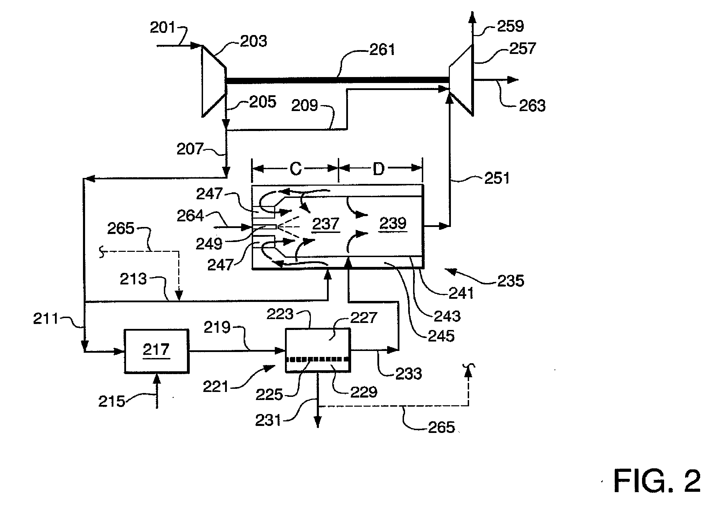

The combustor described above with reference to Fig. 1 may be modified for integration with an ion transport membrane oxygen separation system according to various embodiments of the invention. A first embodiment is illustrated in Fig. 2 in which non-permeate gas from the ITM system is utilized for dilution gas in the combustor. Oxygen-containing gas 201, typically air, may be compressed in compressor 203 to a pressure generally between 3 and 50 atma or more particularly between 7 and 30 atma. Compressed air in line 205 is divided into a major portion via line 207 and a minor portion taken via line 209 for expansion turbine cooling. This turbine cooling typically is accomplished by introducing the cooling air from line 209 into small flow passages within the blades of the turbine. This air provides convective cooling of the blades as it flows through the internal cooling passages. It is then discharged into and mixes with the main flow stream as it expands through the turbine. The compressed air in line 207 is divided into a first portion via line 211 and a second portion via line 213. The first portion in line 211 is combusted with fuel 215 in direct-fired combustor 217 to provide heated combustion gas at 700 to 1,000°C containing 12 to 19 vol % oxygen, and the heated combustion gas flows via line 219 to ion transport membrane system 221. In some specific embodiments, the heated combustion gas may contain 16 to 18 vol % oxygen at a temperature of 800 to 900°C.

While the embodiment of Fig. 2 shows a single compressor 203 providing the compressed air in line 207, another stream of compressed air from an external source (not shown) may be used to supplement the air provided from compressor 203 in line 207. For example, an external or auxiliary compressor may be used if additional feed air is required over and above that which can be provided by compressor 203.

This schematic sketch of ion transport membrane system 221 represents a module or modules containing mixed metal oxide membranes of any appropriate type and configuration known in the art for effecting the transport of oxygen ions through the membrane to generate a high-purity oxygen gas product. Exemplary ion transport membranes and systems for this service are described in U.S. Patents 5,681,373 and 7,179,323, both of which are wholly incorporated herein by reference. Representative ion transport membrane system 221 includes module enclosure 223 having membrane 225 that divides the module into feed side or zone 227 and permeate side or zone 229. High-purity oxygen gas typically containing greater than 99.5 vol % oxygen is withdrawn via line 231, and oxygen-depleted non-permeate gas typically containing 3 to 18 vol % oxygen is withdrawn via outlet line 233.

Combustor 235 is a modification of the combustor of Fig. 1 and includes combustion zone 237 characterized by axial length C, dilution zone 239 characterized by length D, outer shell 241, inner liner 243, annular cooling zone 245, swirler assembly 247, fuel inlet 249, and combustion gas outlet line 251. Non-permeate gas outlet line 233 is in flow communication with dilution zone 239 and compressed air line 213 is in flow communication with the section of annular cooling zone 245 that surrounds combustion zone 237.

Combustion gas flows via line 251 into expansion turbine 257, which recovers work from the hot combustion gas and discharges expanded flue gas via line 259; a portion of the work generated is transferred via shaft 261 to drive compressor 203. Additional work 263 may be used to generate electric power and/or to drive other rotating equipment.

The compressed air introduced via line 213 flows as shown through the portion of annular cooling zone 245 surrounding combustion zone 237 and cools the portion of liner 243 surrounding combustion zone 237. A portion of this air may flow through secondary inlets (not shown) that correspond to secondary inlets 29 of Fig. 1. The air, or the remaining portion of the air, flows through swirler assembly 247 and is combusted with fuel 264 in combustion zone 237, and the combustion gases flow into dilution zone 239. Non-permeate gas from ion transport membrane system 221 via line 233 is introduced as dilution gas into dilution zone 239, where it mixes with and dilutes the combustion gas from combustion zone 237 as shown.

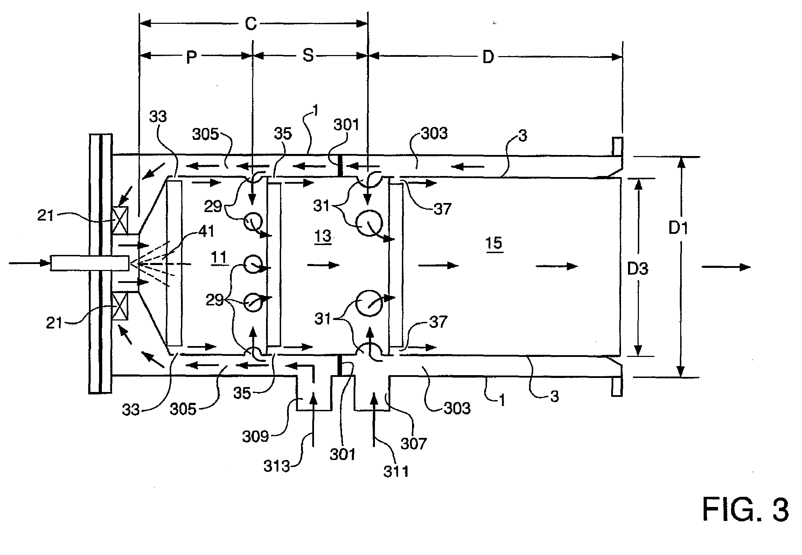

The dilution gas may be introduced via dilution gas inlets (not shown) similar to dilution gas inlets 31 of Fig. 1. This is shown in Fig. 3, which is a modification of the system of Fig. 1. In this embodiment, toroidal partition ring 301 is installed in the annular cooling zone between outer shell 1 and inner liner 3 to separate the annular cooling zone into two separate annular zones, namely, dilution annular cooling zone 303 and combustion annular cooling zone 305. Typically, there is no direct flow communication between zones 303 and 305. Inlet 17 of Fig. 1 is deleted, and two new inlets 307 and 309 are installed in the outer shell. Inlet 307 receives non-permeate gas 311 from outlet 233 (Fig. 2) of ion transport membrane module 221, and inlet 309 receives compressed air 313 from line 213 (Fig. 2). Non-permeate gas 311 flows through dilution gas inlets 31 into dilution zone 15 and provides dilution therein. A portion of this non-permeate gas may flow through openings 37 and along the inner surface of the liner to provide additional cooling. Compressed air 313 flows via inlet 309 through combustion annular zone 305, thereby cooling liner 3, a portion flows through openings 29 to provide secondary combustion air to secondary combustion zone 13, and a portion flows through swirler assembly 21 and is mixed with fuel 41. Some of the air in combustion annular zone 305 may flow through openings 33 and 35 along the inner surface of the liner to provide additional cooling.

An alternative method for introducing to non-permeate gas 311 into dilution zone 15 eliminates the use of toroidal partition ring 301, inlet 307, and holes 31. In this alternative, non-permeate gas 311 is introduced into dilution zone 15 through a plurality of tubes disposed radially at the inlet end of dilution zone 15 and passing through outer shell 1 and inner liner 3.

The combustion process in primary combustion zone 11 and secondary combustion zone 13 of Fig. 3 is similar to the process described above in Fig. 1. In the embodiment of Fig. 3, the dilution process in dilution zone 15 differs from that of Fig. 1 only in that diluent gas 311 has a lower oxygen concentration than air and contains some combustion products from combustor 217. Since the dilution process is simply a mixing process with no chemical reactions involved, the composition of the non-permeate is irrelevant. This would not be the case if the non-permeate were introduced into the combustion zone where its reduced oxygen content would influence the combustion reactions.

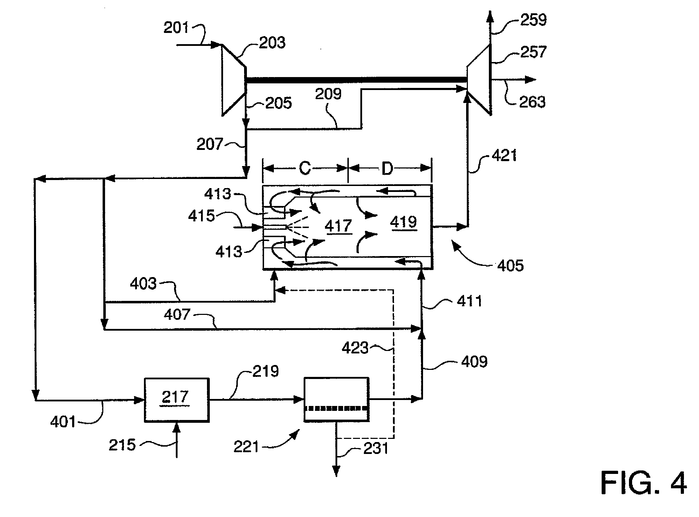

A second embodiment of the invention is illustrated in the schematic flowsheet of Fig. 4. In this embodiment, compressed air in line 207 from compressor 203 is divided into three portions. The first portion flows via line 401 to combustor 217 and the second portion flows via line 403 to combustor 405. The third portion flows via line 407 and is combined with non-permeate gas from ion transport membrane module 221 in line 409 to yield a combined air/non-permeate stream in line 411.

Compressed air in line 403 flows directly into combustion zone 417 through swirler assembly 413 and is combusted with fuel 415 via line 416 in combustion zone 417, and the combustion gases flow into dilution zone 419. The combined compressed air and non-permeate stream in line 411 flows into and through the annular cooling zone surrounding the dilution zone and combustion zone, thereby cooling the liner. A portion of this combined stream flows into the dilution zone to provide dilution gas and another portion flows into the secondary combustion zone. Depending on the relative pressures in the combustion zone and the annular cooling zone, a remaining portion of the combined stream may flow through swirler assembly 413 to provide additional primary combustion oxidant. Alternatively, a toroidal partition ring may be installed to prevent flow of the combined compressed air and non-permeate stream to swirler assembly 413. Final hot combustion gas flows via line 421 to expansion turbine 257 as described above.

While the embodiment of Fig. 4 shows a single compressor 203 providing the compressed air in line 207, another stream of compressed air from an external source (not shown) may be used to supplement the air provided from compressor 203 in line 207. For example, an external or auxiliary compressor may be used if additional feed air is required over and above that which can be provided by compressor 203.

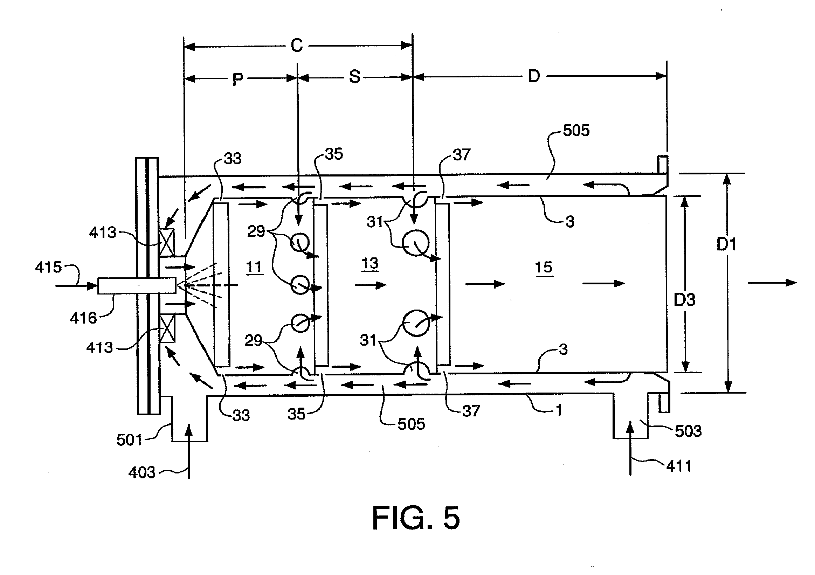

This embodiment is shown in more detail in Fig. 5, which is a modification of the system of Fig. 1 in which inlets 501 and 503 are installed in outer shell 1 as shown. Compressed air in line 403 flows into inlet 501, through swirler assembly 413, and is combusted with fuel 415 in combustion zone 11. The combined compressed air and non-permeate stream in line 411 flows into inlet 503 and through annular cooling zone 505 surrounding the dilution zone and combustion zone, thereby cooling the liner. A portion of this combined stream flows into dilution zone 15 via holes 31 to provide dilution gas therein, and another portion flows into secondary combustion zone 13 via holes 29 to provide secondary oxidant gas. Portions of the combined compressed air and non-permeate stream also may flow via openings 33, 35, and 37 along the inner surface of the liner to provide additional cooling. Depending on the relative pressures in the combustion zone and the annular cooling zone, a remaining portion of the combined stream may flow through swirler assembly 413 to provide additional primary combustion oxidant. Alternatively, a toroidal partition ring (not shown) may be installed in annular cooling zone 505 between openings 33 and inlet 501 to prevent flow of the combined compressed air and non-permeate stream to swirler assembly 413.

The term "directly" as used in reference to the combustion zone means that compressed air (or any other oxygen-containing gas) introduced into the combustion zone does not flow through the annular cooling zone (e.g., 505 of Fig. 5) surrounding the combustion zone and/or the cooling zone before passing into the combustion zone.

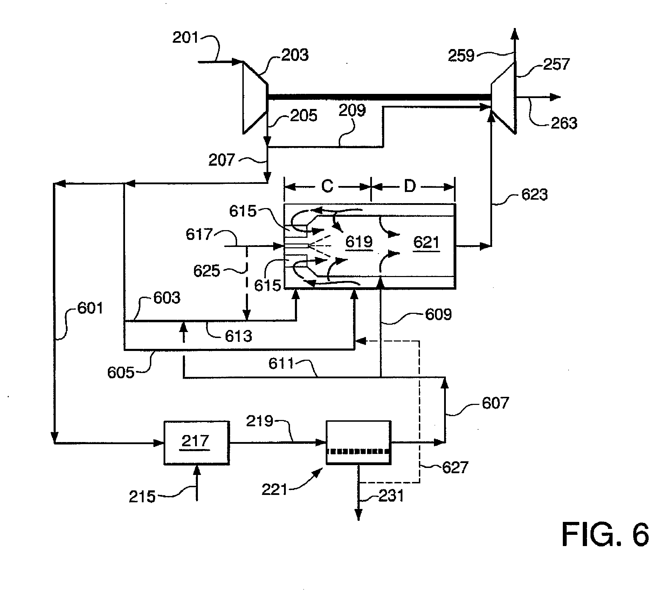

A third embodiment of the invention is illustrated in the schematic flowsheet of Fig. 6. In this embodiment, compressed air in line 207 from compressor 203 is divided into three portions. The first portion flows via line 601 to combustor 217, the second portion flows via line 603, and the third portion flows via line 605. Non-permeate gas from ion transport membrane module 221 in line 607 is divided into two streams via lines 609 and 611. The compressed air in line 603 is mixed with the non-permeate gas from line 611 in a mixing zone (not shown) to provide a combined air/non-permeate gas in line 613. Compressed air in line 605 flows through the annular cooling zone surrounding combustion zone 619, thereby cooling the liner. Portions of this gas flow into combustion zone 619 to provide additional oxidant as described below.

While the embodiment of Fig. 6 shows a single compressor 203 providing the compressed air in line 207, another stream of compressed air from an external source (not shown) may be used to supplement the air provided from compressor 203 in line 207. For example, an external or auxiliary compressor may be used if additional feed air is required over and above that which can be provided by compressor 203.

The term "mixing zone" as used herein refers to any apparatus which promotes the mixing of two or more gas streams to provide a homogenous mixed gas stream. The mixing zone may be a piping tee, a venturi, an inline static mixer, or any other gas mixing device known in the art.

The combined air and non-permeate gas in line 613 is introduced via swirler assembly 615 directly into combustion zone 619 and is combusted therein with fuel 617, and the combustion gases flow into dilution zone 621 where the combustion gas is diluted with the non-permeate gas via line 609. Alternatively, fuel via line 625 may be pre-mixed with the compressed air from line 603 and the pre-mixed gas introduced via line 613 and swirler assembly 615. The pre-mixing should be accomplished rapidly such that the mixing time is below the autoignition delay; this eliminates the potential for undesirable fuel-air pre-ignition prior to combustion zone 619. A small portion of the fuel may be introduced directly into the combustion zone as a pilot stream to ensure flame stability. Final hot combustion gas flows via line 623 to expansion turbine 257 as described above. This embodiment may be useful in controlling NOₓ generation.

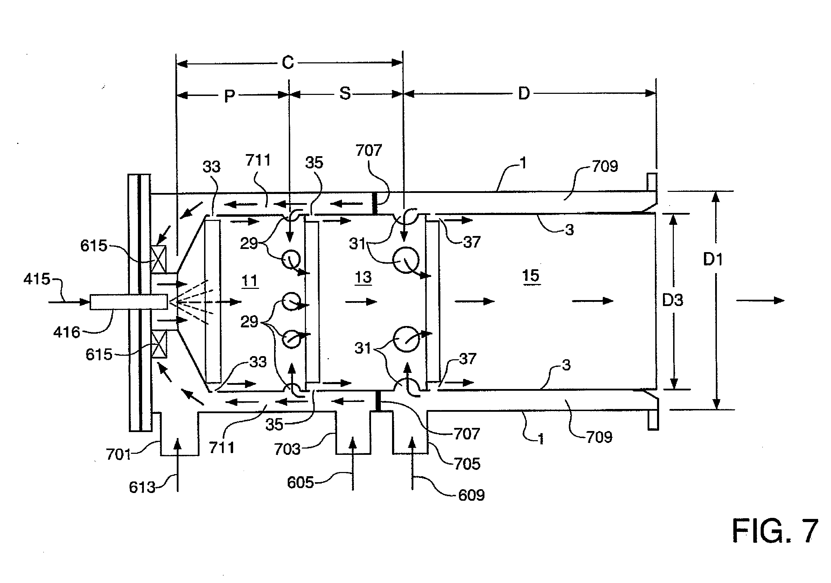

This embodiment is shown in more detail in Fig. 7, which is a modification of the combustor of Fig. 1 wherein inlets 701, 703, and 705 are installed in outer shell 1 as shown. Toroidal partition ring 707 may be installed in the annular cooling zone between outer shell 1 and inner liner 3 to separate the annular cooling zone into two separate annular zones, namely, dilution annular cooling zone 709 and combustion annular cooling zone 711. Typically, there is no flow communication between the zones 709 and 711. Combined air and non-permeate gas from line 613 (or alternatively, premixed fuel and combined air/non-permeate gas) flows into inlet 701, compressed air from line 605 flows into inlet 703, and non-permeate gas from line 609 flows into inlet 705.

Combined air and non-permeate gas flows from line 613 directly into the combustion zone via inlet 701 through swirler assembly 615 and is combusted in primary combustion zone 11 with fuel 415 introduced via line 416. Alternatively, premixed fuel and combined air/non-permeate gas flows from line 613 via inlet 701 through swirler assembly 615 and is combusted in primary combustion zone 11. In this alternative, a small portion of fuel 415 may be introduced directly into the combustion zone via line 416 as a pilot stream to ensure flame stability.

The term "directly" as used herein means that the oxygen-containing gas introduced into the combustion zone does not flow through the annular cooling zone (e.g., 709 of Fig. 7) surrounding the combustion zone and/or the dilution zone before passing into the combustion zone.

Compressed air from line 605 flows via inlet 703 through combustion annular zone 711, thereby cooling liner 3, and a portion of this compressed air flows through openings 29 to provide secondary combustion air to secondary combustion zone 13. Some of the air in combustion annular zone 711 may flow through openings 33 and 35 along the inner surface of the liner to provide additional cooling. Depending on the relative pressures in the combustion zone and the annular cooling zone, a remaining portion of the compressed air in annular cooling zone 711 may flow through swirler assembly 413 to provide additional primary combustion oxidant. Alternatively, a toroidal partition ring (not shown) may be installed in annular cooling zone 711 between openings 33 and inlet 701 to prevent flow of the compressed air from combustion annular zone 711 to swirler assembly 615.

Non-permeate gas from line 609 flows via inlet 705 through dilution gas inlets 31 into dilution zone 15 and provides dilution gas therein. A portion of this non-permeate gas may flow through openings 37 and along the inner surface of the liner to provide additional cooling.

In an alternative operating mode of the system of Figs. 6 and 7, all of the non-permeate gas in line 607 is taken via line 611 and combined with the compressed air in line 603. No non-permeate gas is taken for dilution via line 609. This alternative also may be useful in controlling NOₓ generation as described in Example 5 below.

An alternative method for introducing non-permeate gas from line 609 into dilution zone 15 eliminates the use of toroidal partition ring 707, inlet 705, and holes or openings 31. In this alternative, non-permeate gas from line 609 is introduced into dilution zone 15 through a plurality of tubes disposed radially at the inlet end of dilution zone 15 and passing through outer shell 1 and inner liner 3.

While the embodiments described above use air as the oxygen-containing gas supplied by the gas turbine compressor, any oxygen-containing gas with a concentration of at least 5 vol % oxygen may provide the inlet gas to the gas turbine compressor.

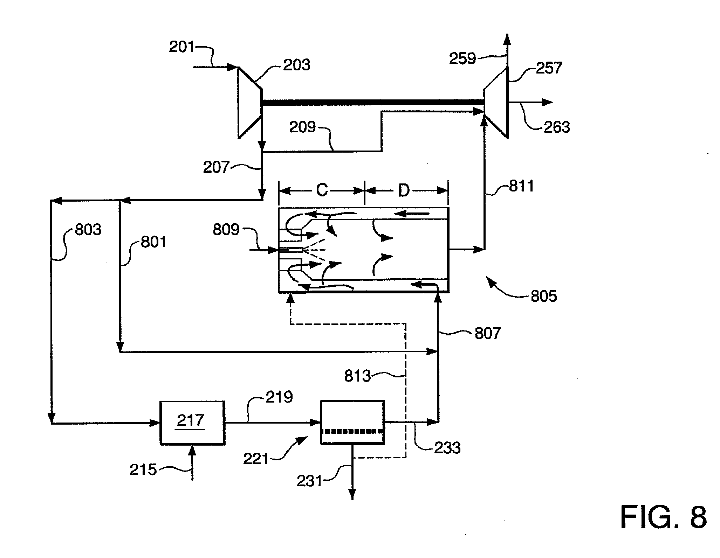

Another embodiment is illustrated in Fig. 8 in which feed air in line 201 is compressed in compressor 203 and divided into two portions via lines 207 and 209. The first portion of the compressed air flows via line 209 and provides cooling air for expansion turbine 257. The remainder of the compressed air flows via line 207 and is divided into two portions via lines 801 and 803. The first portion in line 801 provides the base compressed air stream via line 807 to conventional combustor 805, which is described in detail above with reference to Fig. 1. Line 807 in Fig. 8 enters the combustor at a location equivalent to inlet 17 of Fig. 1. The second portion in line 803 is combusted with fuel provided via line 215 in direct-fired combustor 217, which provides heated combustion gas via line 219 to ion transport membrane system 221 as described earlier with reference to Fig. 2. High-purity oxygen product is withdrawn via line 231.

Non-permeate gas containing a reduced concentration of oxygen is withdrawn via line 233 and combined with the compressed air from line 801 to provide a combined combustion, cooling, and dilution air stream in line 807. The combined gas stream in line 807 is introduced into combustor 805 (equivalent to the combustor of Fig. 1) where it is combusted with fuel provided via line 809. The operation of combustor 805 utilizes the combined stream in line 807 for combustion, cooling, and dilution as described earlier with reference to Fig. 1, except that the combined air/non-permeate stream in line 807 has a lower oxygen concentration than compressed air 43 of Fig. 1. Hot exhaust gas in line 811 is expanded in expansion turbine 257 to produce electric power in a generator (not shown). Hot exhaust gas is discharged via line 259.

While the embodiment of Fig. 8 shows a single compressor 203 providing the compressed air in line 207, another stream of compressed air from an external source (not shown) may be used to supplement the air provided from compressor 203 in line 207. For example, an external or auxiliary compressor may be used if additional feed air is required over and above that which can be provided by compressor 203.

The embodiments described above utilize the pre-mix staged combustors shown in Figs. 1, 3, 5, and 7. Alternatively, these and related embodiments may utilize any other type of combustor known in the art for use in gas turbine systems. For example, diffusion combustors may be used in any of the embodiments described above.

Additional embodiments related to those described above are possible wherein all or a portion of the oxygen product from ion transport membrane module 221 may be utilized to enrich the combustion air provided to the combustion zone of the combustor. The concept of oxygen enrichment may be applied, for example, by burning the fuel (either pre-mixed or as a diffusion flame) with high-purity oxygen at stoichiometric or greater amounts followed by rapid mixing with cooler air or oxygen-depleted non-permeate gas from ion transport membrane module 221. Increasing the concentration of O₂ in the combustion zone increases the rate of fuel oxidation and decreases the concentration of N₂. Both of these effects may reduce NOₓ formation. Increasing the fuel oxidation rate can be used to limit the time in the combustion zone and the corresponding time available for NOₓ forming reactions. Decreasing N₂ concentration reduces the rate of those reactions through its effect on the reaction mechanisms. In addition, the use of oxygen enrichment may improve the ability to burn heavier liquid fuels.

One of these embodiments is illustrated in Fig. 2 wherein all or a portion of the oxygen permeate product in line 231 is withdrawn via line 265 and introduced into the compressed air line 213, thereby enriching this stream at any level up to about 99 vol % oxygen. This has the effect of enriching both the primary and secondary air in the combustor. A compressor (not shown) may be used to compress the oxygen in line 265 prior to introduction into line 213.

Another oxygen-enrichment embodiment is shown in Fig. 4 wherein all or a portion of the oxygen permeate product in line 231 is withdrawn via line 423 and introduced into the compressed air line 403, thereby enriching the primary air in the combustor at any level up to about 99 vol % oxygen. A compressor (not shown) may be used to compress the oxygen in line 423 prior to introduction into line 403

An alternative oxygen-enrichment embodiment is shown in Fig. 6 wherein all or a portion of the oxygen product in line 231 is withdrawn via line 627 and introduced into the compressed air line 605, thereby enriching this stream at any level up to about 99 vol % oxygen. This has the effect of enriching the secondary air in the combustor and will affect the oxygen concentration entering the primary combustion zone of the combustor. A compressor (not shown) may be used to compress the oxygen in line 627 prior to introduction into line 605.

Another alternative is shown in Fig. 8 wherein all or a portion of the oxygen product in line 231 is withdrawn via line 813 and introduced into the primary air region of combustor 805, thereby enriching the combustor primary air at any level up to about 99 vol % oxygen. Alternatively, all or a portion of the permeate gas may be mixed with the fuel in line 809 fuel to form a fuel-oxygen mixture and the mixture introduced directly into the combustion zone. The mixing should be accomplished rapidly such that the mixing time is below the autoignition delay; this eliminates the potential for fuel-oxygen pre-ignition prior to the combustion zone. A compressor (not shown) may be used to compress the oxygen in line 813 prior to introduction into the combustor.

The process embodiments described above with reference to Figs. 2, 4, 6, and 8 may be applied to the combustors illustrated in Figs. 1, 3, 5, and 7 wherein the combustion zone and dilution zone are enclosed by outer shell 1 in a single-can configuration sometimes referred to as a silo combustor. The embodiments also may be applied to any other combustor configuration or geometry having a combustion zone followed by a dilution zone. Other possible configurations typical of the gas-turbine industry include annular, reverse-flow annular, can-annular, and radial combustor geometries.

The following Examples illustrate embodiments of the present invention but do not limit the invention to any of the specific details described therein.

### EXAMPLE 1

A base gas turbine engine was simulated for comparison with the integrated systems in Examples 2 to 5 presented below. The base gas turbine engine, which is not integrated with an ion transport membrane system, may be illustrated by the system of Fig. 4 by deleting combustion heater 217, ion transport membrane system 221, line 401, line 403, line 409, and line 423. In this base gas turbine engine, combustor 405 operates as the combustor described earlier with reference to Fig. 1 and operates with natural gas fuel.

The simulation was performed based on a liner inlet cooling air (line 411, Fig. 4) temperature of 851 °F and used the following engine characteristics:
- Pressure ratio (compressor 203) = 20/1
- Air Flow Rate (compressor 203 discharge) = 344 lb/sec
- Turbine Inlet Temperature (turbine 257) = 2200°F
- Overall Air/Fuel Ratio = 50/1
- Compressor Efficiency (compressor 203) = 85%
- Turbine Efficiency (turbine 257) = 90%
- Turbine Cooling Flow (line 209) = 10% of compressor 203 discharge flow

The simulation of the system operating with the above parameters yielded an equivalent generated electrical power level of 50 MWe.

### EXAMPLE 2

An integrated gas turbine engine and ion transport oxygen generation system illustrated in Fig. 8 was simulated using the engine characteristics of Example 1. This baseline case illustrates a typical integrated gas turbine engine and ion transport oxygen generation system of the prior art and provides a point of reference for comparison with Examples 3-5 presented below. For this baseline example case, the amount of compressed air taken from the gas turbine compressor discharge and sent to the ion transport oxygen generation system was selected to achieve an oxygen concentration of 14 volume % at the inlet to power combustor 805. This oxygen concentration was selected for the purpose of illustration in this Example; other concentrations may be used in actual practice if desired.

Referring to Fig. 8, feed air in line 201 at 344 lb/sec is compressed in compressor 203 to 291 psia at 851°F and divided into two portions via lines 207 and 209. The first portion of the compressed air at 34 lb/sec flows via line 209 and provides cooling air for expansion turbine 257. The remainder of the compressed air flows via line 207 and is divided into two portions via lines 801 and 803. The first portion in line 801 at 119 lb/sec provides the base compressed air stream via line 807 to conventional combustor 805. The second portion in line 803 at 191 lb/sec is combusted with 1.9 lb/sec of natural gas provided via line 215 in direct-fired combustor 217, which provides heated combustion gas at 1562°F (850°C) via line 219 to ion transport membrane system 221 as described earlier with reference to Fig. 2. High-purity oxygen product is withdrawn at a flow rate of 800 tons/day via line 231.

Non-permeate gas at 174 lb/sec containing 10 vol % oxygen is withdrawn via line 233 and combined with the compressed air via line 801 to provide a combined combustion, cooling, and dilution air stream in line 807 containing 14 vol % oxygen at 1278°F. The combined gas stream in line 807 is introduced into combustor 805 (equivalent to the combustor of Fig. 1) where it is combusted with 4.1 lb/sec of natural gas provided via line 809. The operation of combustor 805 utilizes the combined stream in line 807 for combustion, cooling, and dilution as described earlier with reference to Fig. 1, except that the combined air/non-permeate stream in line 807 has a lower oxygen concentration than compressed air 43 of Fig. 1. Hot exhaust gas in line 811 is expanded in expansion turbine 257 to produce electric power 263 at 34 MWe. Hot exhaust gas is discharged via line 259 at 331 lb/sec and 903°F.

### EXAMPLE 3

An integrated gas turbine engine and ion transport oxygen generation system as illustrated in Fig. 2 was simulated using the engine parameters of Example 1 and the combustor configuration of Fig. 3. The achievable system performance for this example is primarily a function of the required air flow split for combustion and liner cooling. For a conventional gas turbine engine, the liner cooling air flow as a portion of the compressor discharge is typically in the 10-40 % range, and the amount of air needed for combustion depends on how lean the combustion process is in the primary zone. For dry low-NOₓ combustors, a lean primary zone equivalence ratio (for example, 0.5) is necessary. The equivalence ratio, Φ, is defined as the actual fuel/air ratio divided by the stoichiometric fuel/air ratio. If another method of NOₓ control is used (e.g., water injection), an equivalence ratio as high as 1.0 in the primary zone may be used. The corresponding combustion air required as a portion of the compressor discharge is on the order of 30 to 60%. Based on these considerations, the following nominal air flow distributions (as percentage portions of the compressor discharge) were selected for the simulation in this Example:
- Liner Cooling Flow = 25%
- Combustion Air Flow = 45%
- Dilution Air Flow = 30%

The system of Fig. 3 is modified in this Example by eliminating toroidal baffle 301 and inlet 311 and introducing air through a plurality of tubes penetrating through the outer shell and inner liner at the inlet to the dilution zone. Therefore, a portion of air 313 entering inlet 309 also passes through film cooling holes 37.

Referring to Fig. 2, inlet air at 344 lb/sec is drawn via inlet line 201 into compressor 203, compressed, and discharged via line 205 at 291 psia and 851 °F. A portion of this compressed air at 34 lb/sec is withdrawn via line 209 for cooling of expansion turbine 257. The compressed air in line 207 is divided into a first portion via line 213 at 195 lb/sec and a second portion via line 211 at 115 lb/sec. The first portion in line 213 is introduced into the annular cooling region surrounding the liner, through swirler assembly 247, and is combusted in combustion zone 237 with 4.9 lb/sec of natural gas 264 provided via fuel inlet 249. The remaining portion provides convective cooling of the liner and enters the liner through secondary holes 29 and film cooling holes 33, 35, and 37 (Fig 3.) Non-permeate gas from membrane module 221 at 105 lb/sec containing 10 vol % oxygen is introduced via line 233 directly into dilution zone 239, where it mixes with and dilutes the combustion gas from combustion zone 237. Combustion gas is discharged at 2200°F via line 251 to expansion turbine, where it is expanded to atmospheric pressure and generates equivalent electric power of 40 MWe. Expander exhaust at 338 lb/sec and 907°F is discharged via turbine outlet 259.

### EXAMPLE 4

An integrated gas turbine engine and ion transport oxygen generation system as illustrated in Fig. 4 was simulated using the engine parameters of Example 1 and the combustor configuration of Fig. 5. Referring to Fig. 4, inlet air at 344 lb/sec is drawn via inlet line 201 into compressor 203, compressed, and discharged via line 205 at 291 psia and 851°F. A portion of this compressed air at 34 lb/sec is withdrawn via line 209 for cooling of expansion turbine 257. The compressed air in line 207 is divided into a first portion at 71 lb/sec via line 401, a second portion at 119 lb/sec via line 403, and a third portion at 120 lb/sec via line 407.

The first portion in line 401 is combusted with natural gas 215 at 0.7 lb/sec in direct-fired combustor 217 to provide heated combustion gas at 1562°F (850°C) containing 17.24 vol % oxygen, and the heated combustion gas flows via line 219 to ion transport membrane system 221 as described earlier with reference to Fig. 2. High-purity oxygen product is withdrawn at a flow rate of 300 tons/day via line 231. Non-permeate gas at 64 lb/sec containing 10 vol % oxygen is withdrawn via line 409. The second portion of compressed air in line 403 is introduced directly into combustion zone 417 via swirler assembly 413 and is combusted with natural gas fuel 415 at 5.4 lb/sec. The third portion of compressed air in line 407 is combined with the non-permeate gas via line 409 to yield a combined air/non-permeate gas in line 411 at a temperature of 1100°F.

Referring to Fig. 5, which is a more detailed illustration of combustor 405 of Fig. 4, compressed air from line 403 flows into inlet 501 and through swirler assembly 413 directly into primary combustion zone 11, where it is combusted with natural gas 415 introduced via inlet 416.

The combined air/non-permeate gas in line 411 is introduced into inlet 503 and flows as shown through annular cooling zone 505 surrounding the dilution and combustion zones, thereby cooling liner 3. A portion of the air/non-permeate gas flows through openings 37 and along the inner surface of liner 3 to provide additional cooling. Another portion of the combined air/non-permeate gas flows through openings 31 into dilution zone 15 to mix with and dilute the combustion gas from the combustion zone. Another portion of the combined air/non-permeate gas flows through openings 33, 35, and 37 and along the inner surface of liner 3 to provide additional cooling. An additional portion of the combined air/non-permeate gas flows through openings 29 to provide oxidant gas to secondary combustion zone 13. The remaining combined air/non-permeate stream flows to swirler 413.

Hot pressurized combustion gas from dilution zone 15 (Fig. 5) or 419 (Fig. 4) is discharged at 2200°F via line 421 to expansion turbine 257, where it is expanded to atmospheric pressure and generates equivalent electric power 263 of 43 MWe. Expander exhaust at 343 lb/sec and 910°F is discharged via turbine outlet 259.

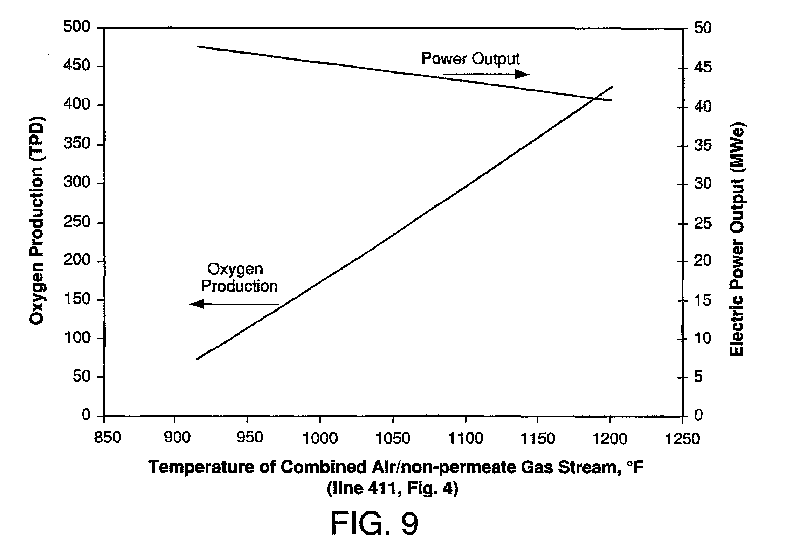

This process allows the non-permeate gas to be used for both dilution and liner cooling, and the extent to which this can be achieved is a function of the temperature of the combined air/non-permeate gas stream in line 411. To examine the tradeoffs involved, a series of parametric calculations were carried out by varying the amount of compressed air in line 407 that is mixed with the non-permeate gas in line 409. The results are plotted in Fig. 9. For cooling purposes, the allowable upper limit on the combined air/non-permeate gas temperature is around 1200°F, which is comparable to the combustor inlet temperature level in recuperated gas turbine engines. From a practical standpoint, a more realistic limit is on the order of 1100°F, and this is the temperature selected for the simulation described above.

### EXAMPLE 5

An integrated gas turbine engine and ion transport oxygen generation system as illustrated in Fig. 6 was simulated using the engine parameters of Example 1 and the combustor configuration of Fig. 7. Referring to Fig. 6, inlet air at 344 lb/sec is drawn via inlet line 201 into compressor 203, compressed, and discharged via line 205 at 291 psia and 851 °F. A portion of this compressed air at 34 lb/sec is withdrawn via line 209 for cooling of expansion turbine 257. The compressed air in line 207 is divided into a first portion at 143 lb/sec via line 601, a second portion at 80 lb/sec via line 603, and a third portion at 86 lb/sec via line 605.

Referring to Fig. 6, the first portion of compressed air in line 601 is combusted with natural gas via line 215 at 1.4 lb/sec in direct-fired combustor 217 to provide heated combustion gas at 1562°F (850°C) containing 17.24 vol % oxygen, and the heated combustion gas flows via line 219 to ion transport membrane system 221 as described earlier with reference to Fig. 2. High-purity oxygen product is withdrawn at a flow rate of 600 tons/day via line 231. Non-permeate gas at 130 lb/sec containing 10 vol % oxygen is withdrawn via line 607 and line 611, and the non-permeate gas is combined with the compressed air in line 603 to provide a combined air/non-permeate gas in line 613. No non-permeate gas flows through line 609 in this Example. The combined stream of air and non-permeate gas in line 613 is mixed with natural gas at 4.6 lb/sec provided via line 625, and the mixed oxidant/fuel stream flows through swirler assembly 615 and is combusted in combustion zone 619. Hot pressurized combustion gas from the combustor is discharged at 2200°F via line 623 to expansion turbine 257, where it is expanded to atmospheric pressure and generates equivalent electric power 263 of 38 MWe. Expander exhaust at 336 lb/sec and 905°F is discharged via turbine outlet 259.

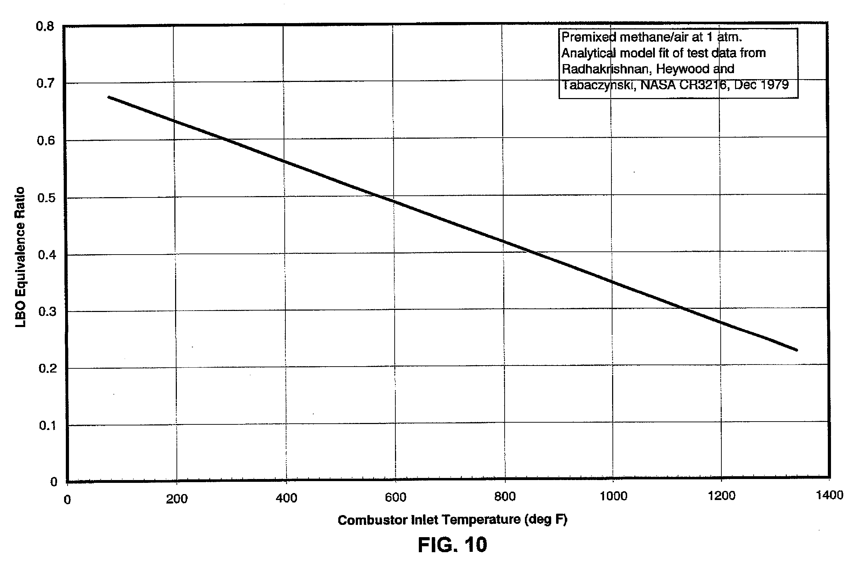

Dry low-NOₓ (DLN) combustors control NOₓ emissions by premixing the fuel with a sufficient quantity of air to obtain a low equivalence ratio, Φ (defined as the actual fuel/air ratio divided by the stoichiometric fuel/air ratio), in the combustion zone. Typically, values of Φ on the order of 0.3 to 0.5 are required to achieve single-digit NOₓ levels (i.e., less than 10 ppmv) Flame stability is a problem at these low equivalence ratio values, but the stability situation can be improved by increasing the inlet air temperature. This effect is demonstrated by the data plotted in Fig. 10, which shows the variation of lean blowout (LBO) ratio with temperature for pre-mixed methane/air flames. The LBO equivalence ratio is the limiting value below which the flame blows out because the fuel/air mixture is too lean (that is, the fuel concentration is too low) to maintain combustion at the existing flow conditions.

The design approach illustrated here provides means for controlling NOₓ in DLN combustors. This is achieved by adding some or all of the non-permeate gas to the combustion air before premixing with the fuel. The relative amounts of combustion air and non-permeate are selected to adjust the fuel concentration and mixture temperature as necessary to enhance flame stability and control NOₓ. In this Example, all of the non-permeate gas is mixed with the combustion air before premixing with the fuel.

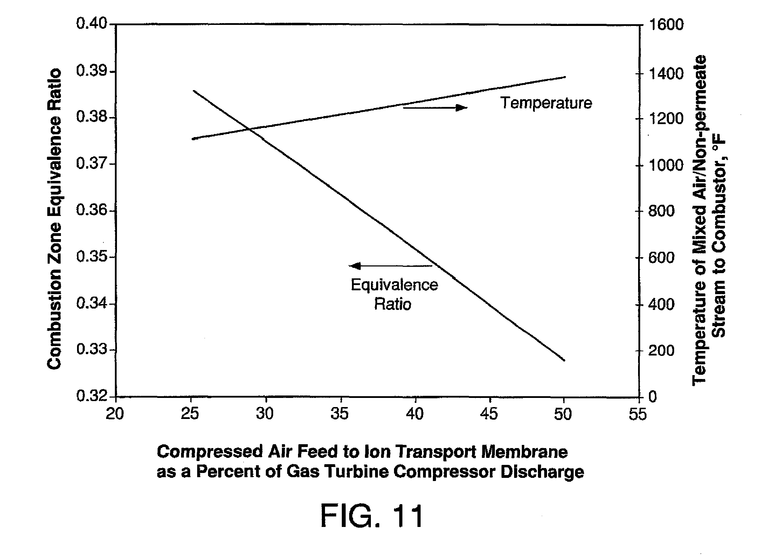

A series of parametric calculations were performed varying the proportions of combustion air and non-permeate gas while maintaining the flow rate of liner cooling air (line 605, Fig. 6) at 25% of the total air from the compressor. The calculations were carried out to illustrate the relationships among the percentage of air from the gas turbine compressor sent to the ion transport membrane system, the equivalence ratio in the combustor, and the temperature of the mixed air/non-permeate stream to the combustor. The calculations were based on combining all of the non-permeate gas with the compressed air to the combustor. The major results are given in Fig. 11, which shows the effect of varying the amount of air extraction (i.e., the portion of the air from the gas turbine compressor taken to the ion transport membrane) on the mixed stream conditions entering the combustion zone. As indicated, equivalence ratios in the 0.3-0.4 range are possible with stream temperatures high enough to ensure stable operation.

Another factor which must be considered is the oxygen concentration of the mixed air/non-permeate stream to the combustor. In order to keep the oxygen concentration in this stream above about 14 volume %, the equivalence ratio should be limited to a minimum practical value of about 0.35. In general, this should be sufficient to achieve a considerable reduction in NOₓ for any typical gas turbine engine.

A summary of selected parameters from Examples 1-5 is given in Table 1 below.

**Table 1**

| Parameter Summary for Examples 1-5 | | | | |
|---|---|---|---|---|
| Example | Oxygen Conc. at GT Combustor Inlet (Volume %) | Liner Cooling Gas inlet Temperature (°F) | Electric Power Output (MWe) | Oxygen Production Rate (TPD) |
| 1 (Base Engine) | 20.8 | 851 | 50 | -- |
| 2 (Baseline - Fig. 8) | 14 | 1278 | 34 | 800 |
| 3 (Fig. 2) | 20.8 | 851 | 40 | 480 |
| 4 (Fig. 4) | 20.8 | 1100 | 43 | 300 |
| 5 (Fig. 6) | 14 | 851 | 38 | 600 |

## Claims

1. An integrated gas turbine combustion engine and ion transport membrane system comprising
(a) a gas turbine combustion engine including
(1) a compressor comprising a compressed oxygen-containing gas outlet and a compressor drive shaft;
(2) a combustor comprising an outer shell, a combustion zone having one or more fuel inlets and one or more oxygen-containing gas inlets; a dilution zone adapted to receive combustion gas from the combustion zone, wherein the dilution zone has a combustion gas inlet, a combustion gas outlet, and one or more dilution gas inlets; and a combustion zone liner surrounding the combustion zone;
(3) a combustion zone annular cooling region disposed between the outer shell and the combustion zone liner, wherein the combustion zone annular cooling region has one or more oxygen-containing gas inlets and is in flow communication with the combustion zone via at least one of the one or more oxygen-containing gas inlets;
(4) a gas expander comprising an inlet in flow communication with the combustion gas outlet, an expansion turbine, and a work output shaft driven by the expansion turbine; and
(5) piping that places the compressed oxygen-containing gas outlet of the compressor in flow communication with the combustion zone;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone; and
(c) piping that places the feed zone outlet of the membrane module in flow communication with any of the one or more dilution gas inlets.

2. The system of Claim 1 further comprising:
piping that places the feed zone outlet of the membrane module in flow communication with either or both of the combustion zone annular cooling region and at least one of the one or more oxygen-containing gas inlets of the combustion zone;
piping between the compressed oxygen-containing gas outlet of the compressor and any of the one or more oxygen-containing gas inlets of the combustion zone annular cooling region, wherein the piping is adapted to introduce compressed oxygen-containing gas into the combustion zone annular cooling region.
piping that places the permeate withdrawal outlet from the permeate zone in flow communication with at least one of the one or more oxygen-containing gas inlets of the combustion zone; and
a mixing zone, piping that places the compressed oxygen-containing gas outlet of the compressor in flow communication with the mixing zone, piping that places the feed zone outlet of the ion transport membrane module in flow communication with the mixing zone, piping adapted to introduce a fuel into the mixing zone, and piping to transfer a combustible gas from the mixing zone to any of the one or more combustible gas inlets of the combustion zone.

3. The system of Claim 1 further comprising:
piping that places the feed zone outlet of the membrane module in flow communication with either or both of the combustion zone annular cooling region and at least one of the one or more oxygen-containing gas inlets of the combustion zone;
piping between the compressed oxygen-containing gas outlet of the compressor and any of the one or more oxygen-containing gas inlets of the combustion zone, wherein the piping is adapted to introduce compressed oxygen-containing gas directly into the combustion zone;
piping that places the permeate withdrawal outlet from the permeate zone in flow communication with the piping that is adapted to introduce compressed oxygen-containing gas directly into the combustion zone;
a dilution zone liner surrounding the dilution zone and a dilution zone annular cooling region disposed between the outer shell and the dilution zone liner, wherein the one or more dilution gas inlets are adapted to feed an oxygen-depleted gas from the ion transport membrane oxygen recovery system into the dilution zone annular cooling region, and wherein the dilution zone annular cooling region is in flow communication with the dilution zone; and
a mixing zone, piping that places the compressed oxygen-containing gas outlet of the compressor in flow communication with the mixing zone, piping that places the feed zone outlet of the ion transport membrane module in flow communication with the mixing zone, and piping adapted to transfer an oxygen-depleted gas from the mixing zone to at least one of the one or more oxygen-containing gas inlets of the combustion zone.

4. The system of Claim 1 wherein the combustion zone comprises a primary combustion zone followed by a secondary combustion zone, wherein at least one of one or more oxygen-containing gas inlets is adapted to introduce at least a portion of the compressed oxygen-containing gas into the primary combustion zone, wherein at least one of one or more oxygen-containing gas inlets is adapted to introduce at least a portion of the compressed oxygen-containing gas into the secondary combustion zone, and wherein the secondary combustion zone includes the combustion gas outlet and further comprising piping that places the permeate withdrawal outlet from the permeate zone in flow communication with the primary combustion zone and/or the secondary combustion zone.

5. A method of operating an integrated combustion turbine and ion transport membrane system comprising:
(a) providing an integrated gas turbine combustion engine and ion transport membrane system that includes
(1) a gas turbine combustion engine comprising
(1a) a compressor having a compressed oxygen-containing gas outlet and a compressor drive shaft;
(1b) a combustor comprising an outer shell, a combustion zone having one or more fuel inlets and one or more oxygen-containing gas inlets; a dilution zone adapted to receive combustion gas from the combustion zone, wherein the dilution zone has a combustion gas inlet, one or more dilution gas inlets, and a diluted combustion gas outlet; and a combustion zone liner surrounding the combustion zone;
(1c) a combustion zone annular cooling region disposed between the outer shell and the combustion zone liner, wherein the combustion zone annular cooling region has one or more oxygen-containing gas inlets and is in flow communication with the combustion zone via at least one of the one or more oxygen-containing gas inlets;
(1d) a gas expander having an inlet in flow communication with the diluted combustion gas outlet, an expansion turbine, and a work output shaft driven by the expansion turbine; and
(1e) piping that places the compressed oxygen-containing gas outlet
of the compressor in flow communication with the combustion zone;
(2) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and
(3) piping that places the feed zone outlet of the membrane module in flow communication with any of the one or more dilution gas inlets;
(b) compressing air in the compressor to provide the compressed oxygen-containing gas and combusting fuel with a first portion of the compressed oxygen-containing gas in the combustion zone to generate a hot combustion gas; diluting the hot combustion gas with a dilution gas to form a diluted hot combustion gas; and expanding the diluted hot combustion gas in the hot gas expansion turbine to generate shaft work;
(c) heating a second portion of the compressed oxygen-containing gas to provide a hot compressed oxygen-containing gas and introducing the hot compressed oxygen-containing gas into the feed zone of the membrane module, withdrawing an oxygen-depleted non-permeate gas from the feed zone, and withdrawing a permeate gas from the permeate withdrawal outlet of the permeate zone; and
(d) introducing at least a portion of the oxygen-depleted non-permeate gas into the dilution zone.

6. The method of Claim 5 further comprising:
introducing all or a portion of the permeate gas into any of the one or more oxygen-containing gas inlets;
introducing a portion of the compressed oxygen-containing gas into the combustion zone annular cooling region; and
mixing a portion of the compressed oxygen-containing gas with a portion of the oxygen-depleted non-permeate gas from the feed zone of the ion transport membrane module to form a mixed oxygen-containing gas, mixing a fuel with the mixed oxygen-containing gas to form a combustible gas, and introducing the combustible gas into the combustible gas inlet of the combustion zone.

7. The method of Claim 5 further comprising:
introducing a portion of the compressed oxygen-containing gas directly into the combustion zone; and
either (1) introducing all or a portion of the permeate gas directly into the combustion zone or (2) mixing all or a portion of the permeate gas with fuel to form a fuel-oxygen mixture and introducing the mixture directly into the combustion zone.

8. The method of Claim 5 further comprising:
introducing a portion of the compressed oxygen-containing gas directly into the combustion zone;
wherein the combustor comprises a dilution zone liner surrounding the dilution zone and a dilution zone annular cooling region disposed between the outer shell and the dilution zone liner, wherein another portion of the compressed oxygen-containing gas is mixed with the oxygen-depleted non-permeate gas from the feed zone of the ion transport membrane module to form a mixed oxygen-containing gas, and wherein a portion of the mixed oxygen-containing gas is introduced into the dilution zone annular cooling region; and
wherein another portion of the mixed oxygen-containing gas is introduced into the combustion zone annular cooling region.

9. The method of Claim 5 wherein the combustion zone comprises a primary combustion zone followed by a secondary combustion zone and the secondary combustion zone includes the combustion gas outlet;
wherein a portion of the compressed oxygen-containing gas is introduced into the primary combustion zone,
wherein another portion of the compressed oxygen-containing gas is introduced into the secondary combustion zone;
wherein at least a portion of the work required to drive the compressor via the compressor drive shaft is provided via the work output shaft of the expansion turbine; and
wherein oxygen-depleted non-permeate gas from the feed zone of the ion transport membrane module is introduced into either of or both of the primary combustion zone and the secondary combustion zone.

10. An integrated gas turbine combustion engine and ion transport membrane system comprising
(a) a gas turbine combustion engine including
(1) a compressor having a compressed oxygen-containing gas outlet and a compressor drive shaft;
(2) a combustor comprising an outer shell, a combustion zone having a combustible gas inlet and one or more oxygen-containing gas inlets; and a combustion zone liner surrounding the combustion zone;
(3) a combustion zone annular cooling region disposed between the outer liner and the combustion zone liner, wherein the combustion zone annular cooling region has an oxygen-containing gas inlet and is in flow communication with the combustion zone via at least one of the one or more oxygen-containing gas inlets;
(4) a gas expander comprising an inlet in flow communication with the combustion gas outlet, an expansion turbine, and a work output shaft driven by the expansion turbine; and
(5) piping adapted to transfer a first portion of the compressed oxygen-containing gas from the compressor to the oxygen-containing gas inlet of the combustion zone cooling region;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone;
(c) a mixing zone, piping adapted to transfer a second portion of the compressed oxygen-containing gas from the compressor to the mixing zone, piping adapted to transfer the oxygen-depleted non-permeate gas from the feed zone to the mixing zone; and
(d) piping adapted to transfer a mixture comprising the second portion of the compressed oxygen-containing gas and the oxygen-depleted non-permeate gas into the combustion zone.

11. A method of operating an integrated combustion turbine and ion transport membrane system comprising
(a) providing an integrated gas turbine combustion engine and ion transport membrane system that includes
(1) a gas turbine combustion engine including
(1a) a compressor having a compressed oxygen-containing gas outlet and a compressor drive shaft;
(1b) a combustor comprising an outer shell, a combustion zone having a combustible gas inlet and one or more oxygen-containing gas inlets; and a combustion zone liner surrounding the combustion zone;
(1c) a combustion zone annular cooling region between the combustion zone and the combustion zone liner, wherein the combustion zone annular cooling region has an oxygen-containing gas inlet and is in flow communication with the combustion zone via at least one of the one or more oxygen-containing gas inlets; and (1d) a gas expander having an inlet in flow communication with the
combustion gas outlet, an expansion turbine, and a work output shaft driven by the expansion turbine;
(2) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone;
(b) compressing air in the compressor to provide the compressed oxygen-containing gas, dividing the compressed oxygen-containing gas into a first portion, a second portion, and a third portion, and introducing the first portion into the combustion zone annular cooling region;
(c) heating the second portion of the compressed oxygen-containing gas to provide a hot compressed oxygen-containing gas and introducing the hot compressed oxygen-containing gas into the feed zone of the membrane module, withdrawing the oxygen-depleted non-permeate gas from the feed zone, and withdrawing a permeate gas from the permeate withdrawal outlet of the permeate zone; and
(d) mixing the third portion of the compressed oxygen-containing gas with the oxygen-depleted non-permeate gas from the feed zone to form a mixed oxygen-depleted gas, combusting a fuel with the mixed oxygen-depleted gas in the combustion zone to generate the hot combustion gas, and expanding the hot combustion gas in the hot gas expansion turbine to generate shaft work.

12. An integrated gas turbine combustion engine and ion transport membrane system comprising
(a) a gas turbine combustion engine including
(1) a compressor comprising a compressed oxygen-containing gas outlet and a compressor drive shaft;
(2) a combustor comprising a combustion zone having a combustible gas inlet and one or more oxygen-containing gas inlets; a dilution zone adapted to receive combustion gas from the combustion zone, wherein the dilution zone has a combustion gas inlet, a combustion gas outlet, and a one or more dilution gas inlets;
(3) a gas expander comprising an inlet in flow communication with the combustion gas outlet, an expansion turbine, and a work output shaft driven by the expansion turbine; and
(4) piping that places the compressed oxygen-containing gas outlet of the compressor in flow communication with the combustion zone;
(b) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone; and
(c) piping that places the feed zone outlet of the membrane module in flow communication with any of the one or more dilution gas inlets.

13. A method of operating an integrated combustion turbine and ion transport membrane system comprising
(a) providing an integrated gas turbine combustion engine and ion transport membrane system that includes
(1) a gas turbine combustion engine comprising
(1a) a compressor having a compressed oxygen-containing gas outlet and a compressor drive shaft;
(1b) a combustor comprising a combustion zone having a combustible gas inlet and one or more oxygen-containing gas inlets; and a dilution zone adapted to receive combustion gas from the combustion zone, wherein the dilution zone has a combustion gas inlet, a one or more dilution gas inlets, and a diluted combustion gas outlet;
(1c) a gas expander having an inlet in flow communication with the diluted combustion gas outlet, an expansion turbine, and a work output shaft driven by the expansion turbine; and
(1d) piping that places the compressed oxygen-containing gas outlet of the compressor in flow communication with the combustion zone;
(2) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and
(3) piping that places the feed zone outlet of the membrane module in flow communication with any of the one or more dilution gas inlets;
(b) compressing air in the compressor to provide the compressed oxygen-containing gas and combusting fuel with a first portion of the compressed oxygen-containing gas in the combustion zone to generate a hot combustion gas; diluting the hot combustion gas with a dilution gas to form a diluted hot combustion gas; and expanding the diluted hot combustion gas in the hot gas expansion turbine to generate shaft work;
(c) heating a second portion of the compressed oxygen-containing gas to provide a hot compressed oxygen-containing gas and introducing the hot compressed oxygen-containing gas into the feed zone of the membrane module, withdrawing an oxygen-depleted non-permeate gas from the feed zone, and withdrawing a permeate gas from the permeate withdrawal outlet of the permeate zone; and
(d) introducing at least a portion of the oxygen-depleted non-permeate gas into the dilution zone.

14. A method of operating an integrated combustion turbine and ion transport membrane system comprising
(a) providing an integrated gas turbine combustion engine and ion transport membrane system that includes
(1) a gas turbine combustion engine comprising
(1a) a compressor having a compressed oxygen-containing gas outlet and a compressor drive shaft;
(1b) a combustor comprising a combustion zone having a combustible gas inlet and one or more oxygen-containing gas inlets; and a dilution zone adapted to receive combustion gas from the combustion zone, wherein the dilution zone has a combustion gas inlet, a one or more dilution gas inlets, and a diluted combustion gas outlet; and
(1c) a gas expander having an inlet in flow communication with the
diluted combustion gas outlet, an expansion turbine, and a work output shaft driven by the expansion turbine;
(2) an ion transport membrane oxygen recovery system having at least one ion transport membrane module, wherein the membrane module includes a feed zone, a permeate zone, an oxygen ion transport membrane that isolates the feed zone from the permeate zone, a feed inlet to the feed zone, piping that places the feed inlet in flow communication with the compressed oxygen-containing gas outlet of the compressor, a feed zone outlet adapted to withdraw an oxygen-depleted non-permeate gas from the feed zone, and a permeate withdrawal outlet from the permeate zone, and
(3) piping that places the feed zone outlet of the membrane module in flow communication with any of the one or more dilution gas inlets;
(b) compressing air in the compressor to provide a compressed oxygen-containing gas, heating at least a portion of the compressed oxygen-containing gas to provide a hot compressed oxygen-containing gas, and introducing the hot compressed oxygen-containing gas into the feed zone of the membrane module, withdrawing an oxygen-depleted non-permeate gas from the feed zone, and withdrawing a high-purity oxygen permeate gas from the permeate withdrawal outlet of the permeate zone; and
(c) combusting fuel with at least a portion of the high-purity oxygen permeate gas in the combustion zone to generate a hot combustion gas; diluting the hot combustion gas with a dilution gas to form a diluted hot combustion gas; and expanding the diluted hot combustion gas in the hot gas expansion turbine to generate shaft work.

15. An integrated gas turbine combustion engine and ion transport membrane system comprising
(a) a gas turbine combustion engine including a compressor with a compressed oxygen-containing gas outlet; a combustor comprising an outer shell, a combustion zone in flow communication with the compressed oxygen-containing gas outlet, and a dilution zone in flow communication with the combustion zone and having one or more dilution gas inlets; and a gas expander; and
(b) an ion transport membrane oxygen recovery system with an ion transport membrane module that includes a feed zone, a permeate zone, a feed inlet to the feed zone in flow communication with the compressed oxygen-containing gas outlet of the compressor, a feed zone outlet, and a permeate withdrawal outlet from the permeate zone;
wherein the feed zone outlet of the membrane module is in flow communication with any of the one or more dilution gas inlets of the combustor dilution zone.
